# EUROPÄISCHE PATENTSCHRIFT

(11) **EP 4 230 926 B1**
(45) Veröffentlichungstag und Bekanntmachung des Hinweises auf die Patenterteilung: **24.09.2025**
(21) Anmeldenummer: 23153130.2
(22) Anmeldetag: 24.01.2023
(51) Int. Cl.: F24F 11/64, F24F 11/74, F24F 11/80, A01K 1/00

(54) **VERFAHREN ZUM STEUERN DES GEBÄUDEKLIMAS EINES FREIBELÜFTETEN GEBÄUDES**
METHOD FOR CONTROLLING THE CLIMATE IN A VENTILATED BUILDING
PROCÉDÉ DE COMMANDE DE LA CLIMATISATION D'UN BÂTIMENT VENTILÉ

(30) Priorität: 21.02.2022 DE 102022104053
(43) Veröffentlichungstag der Anmeldung: 23.08.2023
(73) Patentinhaber: Huesker Synthetic GmbH, 48712 Gescher (DE)
(72) Erfinder: Heitmüller, Hubertus, 31592 Stolzenau (DE); Giesing, Marvin, 46325 Borken (DE); Hüning, Ulrich, 48712 Gescher (DE)
(74) Vertreter: Pelster Behrends Patentanwälte PartG mbB

(56) Entgegenhaltungen:
- EP-A2- 2 609 805
- WO-A1-2021/105786
- CN-A- 110 107 999
- CN-A- 113 983 659
- US-A- 3 801 008
- US-A1- 2011 146 582

## Beschreibung

Die Erfindung betrifft ein Verfahren zum Steuern des Gebäudeklimas eines freibelüfteten Gebäudes, insbesondere eines Tierstalls, mittels eines Gebäudeklimasteuersystems, mit den Schritten: Sensorisches Erfassen von Wetterparametern in der Umgebung des Gebäudes mittels einer Messeinrichtung des Gebäudeklimasteuersystems, wobei ein von der Messeinrichtung erfasster Wetterparameter die Temperatur in der Umgebung des Gebäudes betrifft, und Steuern eines oder mehrerer das Gebäudeklima beeinflussender Klimakonditioniervorrichtungen des Gebäudes mittels einer Steuerungseinrichtung des Gebäudeklimasteuersystems in Abhängigkeit sensorisch erfassten Wetterparameter, wobei die Steuerungseinrichtung in Abhängigkeit von über zumindest einen zurückliegenden Phasenbestimmungszeitraum erfassten Wetterparametern die aktuelle Klimasituation einer von mehreren vorgegebenen Thermophasen zuordnet und die eine oder die mehreren Klimakonditioniereinrichtungen in Abhängigkeit der der aktuellen Klimasituation zugeordneten Thermophase unter Berücksichtigung von thermophasenspezifischen Steuerungsvorgaben steuert.

Die Erfindung betrifft ferner ein Gebäudeklimasteuersystem, insbesondere für die Tierstallklimatisierung, mit einer Messeinrichtung, welche dazu eingerichtet ist, Wetterparameter in der Umgebung eines zu klimatisierenden Gebäudes sensorisch zu erfassen, wobei ein von der Messeinrichtung erfassbarer Wetterparameter die Temperatur in der Umgebung des Gebäudes betrifft, einer oder mehreren Klimakonditioniereinrichtungen, welche in oder an dem Gebäude positionierbar sind und mittels welchen das Gebäudeklima beeinflussbar ist, und einer Steuerungseinrichtung, welche dazu eingerichtet ist, die eine oder die mehreren Klimakonditioniereinrichtungen in Abhängigkeit der sensorisch erfassten Wetterparameter zu steuern, wobei die Steuerungseinrichtung dazu eingerichtet ist, in Abhängigkeit von über zumindest einen zurückliegenden Phasenbestimmungszeitraum erfassten Wetterparametern die aktuelle Klimasituation einer von mehreren vorgegebenen Thermophasen zuzuordnen und die eine oder die mehreren Klimakonditioniereinrichtungen in Abhängigkeit der der aktuellen Klimasituation zugeordneten Thermophase unter Berücksichtigung von thermophasenspezifischen Steuerungsvorgaben zu steuern.

Bei der Nutztierhaltung ist es erforderlich, dass das Gebäudeklima innerhalb eines Tierstalls tierspezifisch gesteuert wird. Über eine geeignete Tierstallklimatisierung kann das Wohlbefinden und das arteigene Verhalten der Nutztiere gefördert und die Infektionswahrscheinlichkeit verringert werden.

Die Tierstallklimatisierung soll also die tiergerechte Nutztierhaltung fördern, die Tiergesundheit steigern und außerdem zu einer Vereinfachung der Hofbewirtschaftung führen.

Die im Stand der Technik bekannten Tierstallklimatisierungen arbeiten bisher ohne intelligente Steuerungsroutinen und berücksichtigen lediglich einzelne steuerungsrelevante Parameter. So ist es beispielsweise bekannt, dass eine Tierstallklimatisierung selbsttätig den Öffnungszustand einer Wickellüftung in Abhängigkeit der Umgebungstemperatur anpasst und die Wickellüftung bei Niederschlag vollständig schließt. Bei den bekannten Tierstallklimatisierungen wird lediglich das aktuelle Wetter berücksichtigt.

Gebäudeklimatisierungen sind beispielsweise aus den Druckschriften EP 2 609 805 A2, CN 113 983 659 A, US 2011/146582 A1, CN 110 107 999 A, WO 2021/105786 A1 und US 3 801 008 A bekannt.

Es hat sich jedoch gezeigt, dass nicht nur die aktuelle Temperatur, sondern vielmehr eine aktuelle Klimasituation bei der Tierstallklimatisierung berücksichtigt werden muss, damit eine klimaangepasste und zum Tierwohl betragende Stallklimatisierung realisiert wird.

Die der Erfindung zugrundeliegende Aufgabe besteht also darin, die aktuelle Klimasituation beim Steuern des Gebäudeklimas eines freibelüfteten Gebäudes, insbesondere eines Tierstalls, zu berücksichtigen.

Die Aufgabe wird gelöst durch ein Verfahren der eingangs genannten Art, wobei die Steuerungseinrichtung im Rahmen des erfindungsgemäßen Verfahrens zum Zuordnen der aktuellen Klimasituation zu einer Thermophase Überschreitungen und/oder Unterschreitungen von Phasenwechseltemperaturen durch die während des Phasenbestimmungszeitraums erfassten Temperaturwerte in der Umgebung des Gebäudes überwacht.

Die thermophasenabhängige Gebäudeklimatisierung erlaubt eine vorausschauende Ansteuerung der Klimakonditioniervorrichtungen auf Grundlage eines Wetterdatenverlaufs. Insbesondere beim Steuern des Gebäudeklimas eines Tierstalls kann auf diese Weise das Wohlbefinden der sich in dem Tierstall befindenden Nutztiere dauerhaft gesteigert werden.

Das frei belüftete Gebäude ist kein ausschließlich zwangsbelüftetes Gebäude. Unter Gebäudeklima sollen die klimatischen Verhältnisse innerhalb des Gebäudes in ihrer Abhängigkeit und Wechselwirkung mit dem umgebenden Klima verstanden werden. Die sensorisch erfassten Wetterparameter können den Niederschlag und/oder die Temperatur und/oder den Wind und/oder die Helligkeit und/oder die Luftfeuchtigkeit in der Umgebung des Gebäudes betreffen.

Die Steuerungseinrichtung kann mehrere signalleitend miteinander verbundene Steuerungsmodule umfassen. Die thermophasenspezifischen Steuerungsvorgaben können beispielsweise von dem Hersteller des Gebäudeklimasteuersystems definiert werden. Im Rahmen einer Erstinstallation werden die thermophasenspezifischen Steuerungsvorgaben beispielsweise je nach Gebäudeausrichtung, Gebäudenutzung, beispielsweise Nutzung als Kuhstall oder als Kälberstall, und anderen gebäudespezifischen Besonderheiten, wie etwa der Gebäudeanordnung, der Gebäudeausstattung, z.B. die Art, Anzahl und/oder Position von Ventilatoren, definiert und hinterlegt. So kann eine Anpassung der Klimatisierung an Region, Gebäudeart und/oder Tierart erfolgen.

In einer bevorzugten Ausführungsform des erfindungsgemäßen Verfahrens ordnet die Steuerungseinrichtung die aktuelle Klimasituation einer von zumindest drei vorgegebenen Thermophasen zu. Beispielsweise ordnet die Steuerungseinrichtung die aktuelle Klimasituation einer Kaltphase, einer Zwischenphase oder einer Warmphase zu. Die Kaltphase bezieht sich auf eine andauernde Klimasituation mit vergleichsweise niedrigen Umgebungstemperaturen. Die Warmphase bezieht sich auf eine andauernde Klimasituation mit vergleichsweise hohen Umgebungstemperaturen. Die Zwischenphase betrifft eine andauernde Klimasituation, in welcher es wärmer als in der Kaltphase und kälter als in der Warmphase ist.

Es ist darüber hinaus ein erfindungsgemäßes Verfahren bevorzugt, bei welchem ein von der Messeinrichtung erfasster Wetterparameter die Temperatur in der Umgebung des Gebäudes betrifft. Die Steuerungseinrichtung überwacht zum Zuordnen der aktuellen Klimasituation zu einer Thermophase Überschreitungen und/oder Unterschreitungen von Phasenwechseltemperaturen durch die während des Phasenbestimmungszeitraums erfassten Temperaturwerte in der Umgebung des Gebäudes. Ausgehend von der Kaltphase wird die aktuelle Klimasituation beispielsweise der Zwischenphase zugeordnet, wenn die Temperatur in der Umgebung des Gebäudes eines erste Phasenwechseltemperatur kontinuierlich während eines ersten Phasenbestimmungszeitraums überschreitet. Die erste Phasenwechseltemperatur liegt vorzugsweise in einem Bereich zwischen 0 °C und 10 °C, beispielsweise bei 5 °C. Der erste Phasenbestimmungszeitraum liegt vorzugsweise in einem Bereich zwischen 24 Stunden und 72 Stunden, beispielsweise bei 48 Stunden. Ausgehend von der Zwischenphase wird die aktuelle Klimasituation beispielsweise der Warmphase zugeordnet, wenn die Temperatur in der Umgebung des Gebäudes eine zweite Phasenwechseltemperatur kontinuierlich während eines ersten Phasenbestimmungszeitraums überschreitet. Die zweite Phasenwechseltemperatur liegt vorzugsweise in einem Bereich zwischen 10 °C und 20 °C, beispielsweise bei 15 °C. Ausgehend von der Warmphase wird die aktuelle Klimasituation beispielsweise der Zwischenphase zugeordnet, wenn die Temperatur in der Umgebung des Gebäudes eine dritte Phasenwechseltemperatur kontinuierlich während eines zweiten Phasenbestimmungszeitraums überschreitet. Die dritte Phasenwechseltemperatur liegt vorzugsweise in einem Bereich zwischen 7 °C und 17 °C, beispielsweise bei 12 °C. Der zweite Phasenbestimmungszeitraum liegt vorzugsweise in einem Bereich zwischen 3 Stunden und 12 Stunden, beispielsweise bei 8 Stunden. Ausgehend von der Zwischenphase wird die aktuelle Klimasituation beispielsweise der Kaltphase zugeordnet, wenn die Temperatur in der Umgebung des Gebäudes eine vierte Phasenwechseltemperatur kontinuierlich während eines zweiten Phasenbestimmungszeitraums unterschreitet. Die vierte Phasenwechseltemperatur liegt vorzugsweise in einem Bereich zwischen 3 °C und -7 °C, beispielsweise bei -2 °C.

In einer anderen bevorzugten Ausführungsform des erfindungsgemäßen Verfahrens ist zumindest eine der von der Steuerungseinrichtung gesteuerten Klimakonditioniervorrichtungen des Gebäudes eine motorisch antreibbare Seitenlüftungsvorrichtung. Die motorisch antreibbare Seitenlüftungsvorrichtung ist insbesondere eine elektromotorisch antreibbare Wickellüftung. Die Wickellüftung kann einen oder mehrere aufwickelbare bzw. auswickelbare Planen-Vorhänge umfassen. Ferner können ein oder mehrere als Seitenlüftungseinrichtungen ausgebildete Klimakonditioniereinrichtungen von der Steuerungseinrichtung gesteuert werden, welche nicht als Wickellüftung ausgebildet sind. Die eine oder die mehreren motorisch antreibbaren Seitenlüftungsvorrichtungen können beispielsweise auch als motorisch verstellbare Hubfenster oder als motorisch antreibbare Falt-Curtains ausgebildet sein.

Es ist darüber hinaus ein erfindungsgemäßes Verfahren bevorzugt, bei welchem die thermophasenspezifischen Steuerungsvorgaben der einen oder den mehreren Klimakonditioniereinrichtungen von der aktuellen Temperatur in der Umgebung des Gebäudes abhängige thermophasenspezifische Soll-Zustände vorgeben. Beispielsweise gibt eine thermophasenspezifische Steuerungsvorgabe in der Kaltphase vor, dass die Seitenlüftungsvorrichtung mit steigender Temperatur bis zum Erreichen eines vorgegebenen Kaltphasenmaximalöffnungszustands geöffnet werden soll. Beispielsweise gibt eine thermophasenspezifische Steuerungsvorgabe in der Zwischenphase vor, dass die Seitenlüftungsvorrichtung mit steigender Temperatur bis zum Erreichen des vollständig geöffneten Zustands geöffnet werden soll. Beispielsweise gibt eine thermophasenspezifische Steuerungsvorgabe in der Warmphase vor, dass die Seitenlüftungsvorrichtung unabhängig von der Temperatur vollständig geöffnet sein soll.

In einer bevorzugten Ausführungsform des erfindungsgemäßen Verfahrens wird mittels der Messeinrichtung die Temperatur innerhalb des Gebäudes erfasst, wobei die thermophasenspezifischen Steuerungsvorgaben der einen oder den mehreren Klimakonditioniereinrichtungen von der aktuellen Temperatur innerhalb des Gebäudes abhängige thermophasenspezifische Soll-Zustände vorgeben. Die Messeinrichtung kann mehrere Messmodule umfassen. Eine oder mehrere Messmodule können außerhalb des Gebäudes positioniert sein. Ein oder mehrere Messmodule können innerhalb des Gebäudes positioniert sein. Ein Messmodul kann als Wetterstation ausgebildet sein.

In einer anderen bevorzugten Ausführungsform des erfindungsgemäßen Verfahrens betrifft ein von der Messeinrichtung erfasster Wetterparameter die Präsenz von Niederschlag und/oder die Niederschlagsmenge in der Umgebung des Gebäudes. Hierzu kann die Messeinrichtung einen Regensensor umfassen. Die Präsenz von Niederschlag in Form von Regen kann beispielsweise festgestellt werden, indem geprüft wird, ob eine Sensorfläche des Regensensors nass ist oder nicht. Die Messempfindlichkeit des Regensensors kann einstellbar sein. Die thermophasenspezifischen Steuerungsvorgaben geben der einen oder den mehreren Klimakonditioniereinrichtungen thermophasenspezifische Soll-Zustände vor, welche von der aktuellen Präsenz von Niederschlag und/oder von der Niederschlagsmenge in der Umgebung des Gebäudes abhängig sind . Eine thermophasenspezifische Steuerungsvorgabe veranlasst in der Kaltphase beispielsweise, dass der Kaltphasenmaximalöffnungszustand der Seitenlüftungsvorrichtung niederschlagsbedingt herabgesetzt wird. Eine thermophasenspezifische Steuerungsvorgabe veranlasst in der Zwischenphase beispielsweise, dass die Seitenlüftungsvorrichtung mit steigender Temperatur niederschlagsbedingt lediglich bis zum Erreichen eines vorgegebenen Zwischenphasenmaximalöffnungszustands geöffnet wird. Eine thermophasenspezifische Steuerungsvorgabe veranlasst in der Warmphase beispielsweise, dass die Seitenlüftungsvorrichtung unabhängig von der Temperatur niederschlagsbedingt lediglich bis zu einem Warmphasenmaximalöffnungszustand geöffnet wird.

Es ist ferner ein erfindungsgemäßes Verfahren bevorzugt, bei welchem ein von der Messeinrichtung erfasster Wetterparameter den Wind in der Umgebung des Gebäudes betrifft, wobei die thermophasenspezifischen Steuerungsvorgaben der einen oder den mehreren Klimakonditioniervorrichtungen von dem aktuellen Wind in der Umgebung des Gebäudes abhängige thermophasenspezifische Soll-Zustände vorgeben. Die maximale Öffnung der Seitenlüftungsvorrichtung kann in den jeweiligen Thermophasen windbedingt verkleinert werden. Die Messeinrichtung kann beispielsweise die Windrichtung und/oder die Windstärke erfassen. In der Warmphase deutet Windstille beispielsweise in Kombination mit gelegentlich auftretenden kurzen Böen auf ein aufziehendes Gewitter hin. Zum Gebäudeschutz können in diesen Situationen dann die Seitenlüftungsvorrichtungen geschlossen werden.

Das erfindungsgemäße Verfahren wird ferner dadurch vorteilhaft weitergebildet, dass mittels der Messeinrichtung Schadgasmengen oder Schadgaskonzentrationen innerhalb des Gebäudes erfasst werden, wobei die thermophasenspezifischen Steuerungsvorgaben der einen oder den mehreren Klimakonditioniervorrichtungen von der aktuellen Schadgasmenge oder von der aktuellen Schadgaskonzentration innerhalb des Gebäudes abhängige thermophasenspezifische Soll-Zustände vorgeben. Die erfassten Schadgasmengen können Kohlenstoffdioxidmengen und/oder Ammoniakmengen sein. Die erfassten Schadgaskonzentrationen können Kohlenstoffdioxidkonzentrationen und/oder Ammoniakkonzentrationen sein. Im Rahmen des Verfahrens können die Konzentrationsverläufe der Schadgase auch aufgezeichnet und gespeichert werden. Somit können auch verlaufsabhängige und thermophasenspezifische Soll-Zustände bei der Gebäudeklimatisierung berücksichtigt werden.

In einer vorteilhafthaften Weiterbildung des erfindungsgemäßen Verfahrens wird mittels der Messeinrichtung die Luftfeuchtigkeit in der Umgebung und/oder innerhalb des Gebäudes erfasst. Die thermophasenspezifischen Steuerungsvorgaben geben der einen oder den mehreren Klimakonditioniereinrichtungen von der aktuellen Luftfeuchtigkeit in der Umgebung oder innerhalb des Gebäudes abhängige thermophasenspezifische Soll-Zustände vor. Über die Luftfeuchtigkeit kann beispielsweise der THI-Wert (thermal-humidity-index) erfasst und bei der Steuerung berücksichtigt werden.

In einer weiteren bevorzugten Ausführungsform des erfindungsgemäßen Verfahrens betreffen die vorgegebenen thermophasenspezifischen Soll-Zustände der Seitenlüftungsvorrichtung ausgebildeten Klimakonditioniereinrichtung deren Öffnungszustand. Somit kann über die thermophasenspezifischen Soll-Zustände ein thermophasenspezifisches Öffnungsverhalten für die Seitenlüftungsvorrichtung vorgegeben werden.

In einer anderen bevorzugten Ausführungsform des erfindungsgemäßen Verfahrens umfassen die thermophasenspezifischen Steuerungsvorgaben einen oder mehrere thermophasenspezifische Zusammenhänge zwischen der Temperatur in der Umgebung des Gebäudes und Einstellwerten für die eine oder die mehreren Klimakonditioniereinrichtungen. Die Steuerungseinrichtung passt die thermophasenspezifischen Zusammenhänge in vorgegebenen Wettersituationen und/oder bei vorgegebenen Gebäudeklimazuständen in vorgegebener Weise an. Den Klimakonditioniereinrichtungen kann somit ein thermophasenspezifisches wettersituationsabhängiges und/oder gebäudeklimazustandsabhängiges Betriebsverhalten vorgegeben werden.

Das erfindungsgemäße Verfahren wird ferner dadurch vorteilhaft weitergebildet, dass zumindest eine der von der Steuerungseinrichtung gesteuerten Klimakonditioniereinrichtungen des Gebäudes ein motorisch antreibbares aktives Lüftungselement oder ein motorisch antreibbarer Ventilator ist. Eine oder mehrere Klimakonditioniereinrichtungen des Gebäudes sind beispielsweise motorisch antreibbare Deckenventilatoren. Eine oder mehrere Klimakonditioniereinrichtungen des Gebäudes sind beispielsweise motorisch antreibbare Axialventilatoren. Eine oder mehrere Klimakonditioniereinrichtungen des Gebäudes sind beispielsweise motorisch antreibbare und in ein Schlauchlüftungssystem integrierte Ventilatoren. Über die Ventilatoren kann die Zuluft, ein gebäudeinterner Luftstrom und/oder die Umluft im Gebäude gesteuert werden. In einer anderen bevorzugten Ausführungsform des erfindungsgemäßen Verfahrens betreffen die vorgegebenen thermophasenspezifischen Soll-Zustände der als Ventilator ausgebildeten Klimakonditioniereinrichtungen dessen Drehzahl und/oder Drehrichtung. Abhängig von der aktuellen Thermophase wird den als Ventilator ausgebildeten Klimakonditioniereinrichtungen also eine Drehzahl und/oder eine Drehrichtung vorgegeben.

Das erfindungsgemäße Verfahren wird ferner dadurch vorteilhaft weitergebildet, dass zumindest eine der von der Steuerungseinrichtung gesteuerten Klimakonditioniereinrichtungen des Gebäudes eine Verdampfungskühleinrichtung ist. Die Verdampfungskühleinrichtung ist vorzugsweise dazu eingerichtet, eine Befeuchtungskühlung umzusetzen, bei welcher es aufgrund einer Verdunstung von flüssigem Wasser zu Wasserdampf zu einer Absenkung der Lufttemperatur kommt. Die Verdampfungskühleinrichtung kann dazu eingerichtet sein, Wasser innerhalb des Gebäudes zu versprühen. Die Verdampfungskühleinrichtung kann eine Hochdruckverneblung umsetzen, bei welcher das Wasser feintropfig versprüht bzw. vernebelt wird. Durch diese adiabatische Kühlung kann die Luft innerhalb des Gebäudes um mehrere Grad Celsius abgekühlt werden. Die Verdampfungskühleinrichtung kann alternativ eine Niederdruckversprühung umsetzen, bei welcher das Wasser großtropfig, beispielsweise auf die Tiere in dem Gebäude, versprüht wird. Auf diese Weise wird das Fell der Tiere durchnässt. In diesem Fall werden die Tiere direkt durch die Verdunstungskälte auf der Haut gekühlt. Die Steuerungseinrichtung steuert eine oder mehrere Verdampfungskühleinrichtungen unter Berücksichtigung von thermophasenspezifischen Steuerungsvorgaben. Die Steuerungseinrichtung steuert die eine oder die mehreren Verdampfungskühleinrichtungen vorzugsweise thermophasenspezifisch in Abhängigkeit der Temperatur innerhalb und/oder außerhalb des Gebäudes und/oder thermophasenspezifisch in Abhängigkeit der Luftfeuchtigkeit innerhalb des Gebäudes. Die Steuerungseinrichtung steuert die eine oder die mehreren Verdampfungskühleinrichtungen vorzugsweise auch in Abstimmung mit anderen Klimakonditioniereinrichtungen des Gebäudes, beispielsweise in Abstimmung mit einem oder mehreren Ventilatoren und/oder in Abstimmung mit einer oder mehreren Seitenlüftungsvorrichtungen.

Es ist darüber hinaus ein erfindungsgemäßes Verfahren bevorzugt, bei welchem mittels der Messeinrichtung die Helligkeit innerhalb des Gebäudes erfasst wird. Die thermophasenspezifischen Steuerungsvorgaben geben der einen oder der mehreren Klimakonditioniereinrichtungen von der aktuellen Helligkeit innerhalb des Gebäudes abhängige thermophasenspezifische Soll-Zustände vor. In Abhängigkeit der Helligkeit innerhalb des Gebäudes kann eine Beschattung über die motorisch antreibbare Seitenlüftungsvorrichtung vorgenommen werden, sofern die Wetterparameter in der Umgebung des Gebäudes dies erlauben.

In einer anderen bevorzugten Ausführungsform des erfindungsgemäßen Verfahrens ist zumindest eine der von der Steuerungseinrichtung gesteuerten Klimakonditioniereinrichtung des Gebäudes eine Beleuchtungseinrichtung. In Abhängigkeit der Helligkeit innerhalb des Gebäudes kann die Beleuchtung innerhalb des Gebäudes gesteuert werden. Die Beleuchtungseinrichtung kann eine oder mehreren LEDs umfassen.

In einer vorteilhaften Weiterbildung des erfindungsgemäßen Verfahrens werden mittels der Messeinrichtung erfasste Wetterparameter in der Umgebung des Gebäudes, Temperaturen innerhalb des Gebäudes, Schadgasmengen oder Schadgaskonzentrationen innerhalb des Gebäudes und/oder Luftfeuchtigkeiten in der Umgebung oder innerhalb des Gebäudes als Auswertedaten einer Datenbank gespeichert. Ein Auswertemodul des Gebäudeklimasteuersystems wertet vorzugsweise den Einfluss der thermophasenspezifischen Steuerungsvorgaben auf die Auswertedaten aus. Das Gebäudeklimasteuersystem kann selbstlernend sein und die thermophasenspezifischen Steuerungsvorgaben auf Grundlage der Auswertung des Auswertemoduls selbsttätig anpassen. Die thermophasenspezifischen Steuerungsvorgaben können auch in der Datenbank gespeichert sein, sodass die Steuerungseinrichtung, beispielsweise nach einer Anpassung der thermophasenspezifischen Steuerungsvorgaben, diese von der Datenbank abrufen kann.

Es ist darüber hinaus ein erfindungsgemäßes Verfahren vorteilhaft, bei welchem thermophasenspezifische Steuerungsvorgaben über ein mobiles Endgerät durch einen Bediener anpassbar sind. Das mobile Endgerät kann beispielsweise ein Tablet sein. Über das mobile Endgerät kann der Bediener auch mittels der Messeinrichtung erfasste Wetterparameter in der Umgebung des Gebäudes, Temperaturen innerhalb des Gebäudes, Schadgasmengen oder Schadgaskonzentrationen innerhalb des Gebäudes und/oder Luftfeuchtigkeiten in der Umgebung und/oder innerhalb des Gebäudes von der Datenbank abrufen.

Die der Erfindung zugrundeliegende Aufgabe wird ferner durch ein Gebäudeklimasteuersystem der eingangs genannten Art gelöst, wobei die Steuerungseinrichtung des erfindungsgemäßen Gebäudeklimasteuersystems dazu eingerichtet ist, zum Zuordnen der aktuellen Klimasituation zu einer Thermophase Überschreitungen und/oder Unterschreitungen von Phasenwechseltemperaturen durch die während des Phasenbestimmungszeitraums erfassten Temperaturwerte in der Umgebung des Gebäudes zu überwachen.

Das erfindungsgemäße Gebäudeklimasteuersystem ist vorzugsweise dazu eingerichtet, das Verfahren zum Steuern des Gebäudeklimas nach einer der vorstehend beschriebenen Ausführungsformen auszuführen. Hinsichtlich der Vorteile und Modifikationen des erfindungsgemäßen Gebäudeklimasteuersystems wird somit auf die Vorteile und Modifikationen des erfindungsgemäßen Verfahrens zum Steuern des Gebäudeklimas verwiesen. Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes Gebäudeklimasteuersystem in einer schematischen Darstellung;
- Fig. 2: als motorisch antreibbare Ventilatoren ausgebildete Klimakonditioniereinrichtungen, welche in einem erfindungsgemäßen Gebäudeklimasteuersystem zum Einsatz kommen können in einer schematischen Darstellung;
- Fig. 3: ein von der Steuerungseinrichtung eines erfindungsgemäßen Gebäudeklimasteuersystems ausgeführtes Zuordnungskonzept zur Zuordnung der aktuellen Klimasituation zu einer von mehreren Thermophasen in einer schematischen Darstellung;
- Fig. 4: eine thermophasenspezifische Steuerungsvorgabe, nach welcher die Steuerungseinrichtung eines erfindungsgemäßen Gebäudeklimasteuersystems eine Seitenlüftungsvorrichtung in der Kaltphase steuert;
- Fig. 5: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Kaltphase steuert;
- Fig. 6: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Kaltphase steuert;
- Fig. 7: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Kaltphase steuert;
- Fig. 8: eine thermophasenspezifische Steuerungsvorgabe, nach welcher die Steuerungseinrichtung eines erfindungsgemäßen Gebäudeklimasteuersystems einen motorisch antreibbaren Ventilator in der Kaltphase steuert;
- Fig. 9: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Kaltphase steuert;
- Fig. 10: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Kaltphase steuert;
- Fig. 11: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Kaltphase steuert;
- Fig. 12: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Kaltphase steuert;
- Fig. 13: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Kaltphase steuert;
- Fig. 14: eine thermophasenspezifische Steuerungsvorgabe, nach welcher die Steuerungseinrichtung eines erfindungsgemäßen Gebäudeklimasteuersystems eine Seitenlüftungsvorrichtung in der Zwischenphase steuert;
- Fig. 15: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Zwischenphase steuert;
- Fig. 16: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Zwischenphase steuert;
- Fig. 17: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Zwischenphase steuert;
- Fig. 18: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Zwischenphase steuert;
- Fig. 19: eine thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 20: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 21: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 22: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 23: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 24: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 25: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 26: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Zwischenphase steuert;
- Fig. 27: eine thermophasenspezifische Steuerungsvorgabe, nach welcher die Steuerungseinrichtung eines erfindungsgemäßen Gebäudeklimasteuersystems eine Seitenlüftungsvorrichtung in der Warmphase steuert;
- Fig. 28: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Warmphase steuert;
- Fig. 29: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Warmphase steuert;
- Fig. 30: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Warmphase steuert;
- Fig. 31: eine weitere thermophasenspezifische Steuerungsvorgabe, nach welcher die Steuerungseinrichtung eines erfindungsgemäßen Gebäudeklimasteuersystems eine Seitenlüftungsvorrichtung in der Warmphase steuert;
- Fig. 32: eine thermophasenspezifische Steuerungsvorgabe, nach welcher die Steuerungseinrichtung eines erfindungsgemäßen Gebäudeklimasteuersystems einen motorisch antreibbaren Ventilator in der Warmphase steuert;
- Fig. 33: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Warmphase steuert;
- Fig. 34: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Warmphase steuert; und
- Fig. 35: eine weitere thermophasenspezifische Steuerungsvorgabe, nach welcher die Steuerungseinrichtung eines erfindungsgemäßen Gebäudeklimasteuersystems einen motorisch antreibbaren Ventilator in der Warmphase steuert.

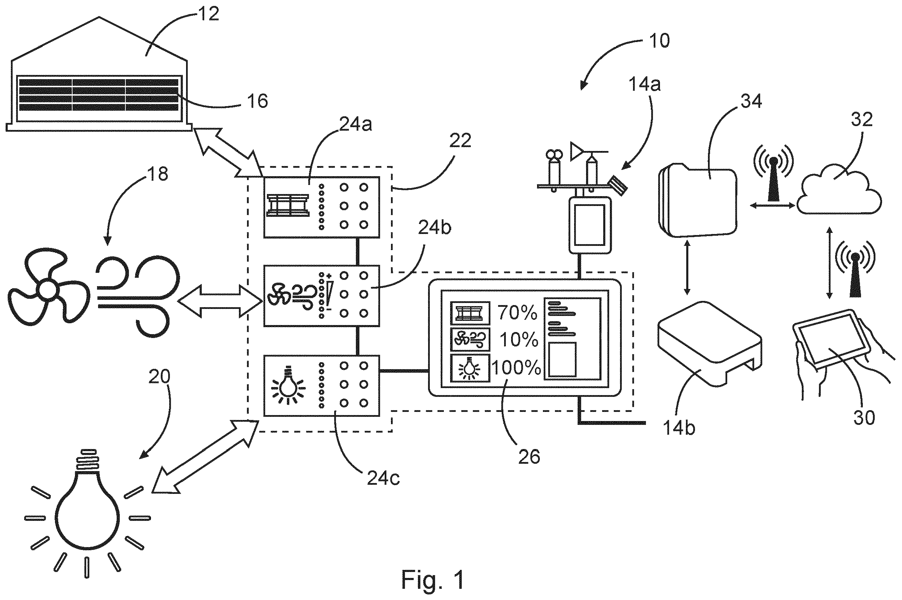

Die Fig. 1 zeigt ein Gebäudeklimasteuersystem 10 zum Steuern des Gebäudeklimas in dem Gebäude 12. Das Gebäude 12 ist ein frei belüfteter Tierstall.

Das Gebäudeklimasteuersystem 10 umfasst eine Messeinrichtung aus zwei Messmodulen 14a, 14b. Über das Messmodul 14a können Wetterparameter T, WI, N in der Umgebung des Gebäudes 12 sensorisch erfasst werden. Die Messeinrichtung umfasst neben dem als Wetterstation ausgebildeten Messmodul 14a, welches außerhalb des Gebäudes 12 positioniert ist, ein weiteres Messmodul 14b, welches innerhalb des Gebäudes 12 positioniert ist.

Das Gebäudeklimasteuersystem 10 umfasst ferner mehrere Klimakonditioniereinrichtungen 16, 18, 20, welche in bzw. an dem Gebäude 12 positioniert sind. Mittels der Klimakonditioniereinrichtungen 16, 18, 20 ist das Gebäudeklima innerhalb des Gebäudes 12 beeinflussbar. Die Klimakonditioniereinrichtung 16 ist eine motorisch antreibbare Seitenlüftungsvorrichtung. Die Seitenlüftungsvorrichtung ist als elektromotorisch antreibbare Wickellüftung ausgebildet. Alternativ kann die Seitenlüftungsvorrichtung ein oder mehrere motorisch verstellbare Hubfenster umfassen.

Die Wickellüftung umfasst eine oder mehrere aufwickelbare bzw. auswickelbare Planen-Vorhänge. Die Klimakonditioniereinrichtung 18 kann eine oder mehrere motorisch antreibbare Ventilatoren umfassen. Mittels der Klimakonditioniereinrichtung 18 lassen sich Luftströmungen in dem Gebäude 12 erzeugen. Die Klimakonditioniereinrichtung 20 ist eine Beleuchtungseinrichtung. Mittels der als Beleuchtungseinrichtung ausgebildeten Klimakonditioniereinrichtung lässt sich der Innenraum des Gebäudes 12 oder Teile des Innenraums des Gebäudes 12 gezielt ausleuchten, wobei die Helligkeit über eine Steuerung der Beleuchtungseinrichtung einstellbar ist.

Das Gebäudeklimasteuersystem 10 umfasst ferner eine Steuerungseinrichtung 22, mittels welcher die Klimakonditioniereinrichtungen 16, 18, 20 in Abhängigkeit der von dem Messmodul 14a der Messeinrichtung erfassten Wetterparameter T, WI, N gesteuert werden können. Die Steuerungseinrichtung 22 umfasst mehrere Steuerungsmodule 24a-24c, 26. Das Steuerungsmodul 24a dient zum Ansteuern der als Seitenlüftungsvorrichtung ausgebildeten Klimakonditioniereinrichtung 16. Das Steuerungsmodul 24b dient zum Ansteuern der einen oder mehrere Ventilatoren umfassenden Klimakonditioniereinrichtung 18. Das Steuerungsmodul 24c dient zum Ansteuern der als Beleuchtungseinrichtung ausgebildeten Klimakonditioniereinrichtung 20. Über die Steuerungsmodule 24a-24c können die Klimakonditioniereinrichtungen 16, 18, 20 direkt manuell über Eingabeelemente an den Steuerungsmodulen 24a-24c angesteuert werden. Darüber hinaus sind die Steuerungsmodule 24a-24c mit dem Steuerungsmodul 26 verbunden, über welches die Klimakonditioniereinrichtungen 16, 18, 20 in Abhängigkeit der sensorisch erfassten Wetterparameter T, N, WI ohne die Notwendigkeit eines Bedienereingriffs gesteuert werden. Die Steuerungseinrichtung 22 kann die Klimakonditioniereinrichtungen 16, 18, 20 also in Abhängigkeit der Temperatur T in der Umgebung des Gebäudes 12, in Abhängigkeit der Präsenz von Niederschlag N und/oder der Niederschlagsmenge in der Umgebung des Gebäudes 12 und in Abhängigkeit des Windes WI in der Umgebung des Gebäudes 12 steuern.

In dem dargestellten Ausführungsbeispiel ist die Steuerungseinrichtung 22 mit einem nicht dargestellten Auswertemodul verbunden, welches beispielsweise in das Steuerungsmodul 26 integriert sein kann oder welches Bestandteil eines entfernten Servers ist. Das Auswertemodul kann auf eine cloudbasierte Datenbank 32 zugreifen. Über das Messmodul 14b der Messeinrichtung und den Gateway 34 können Auswertedaten, welche das Gebäudeklima in dem Gebäude 12 betreffen, in der Datenbank 32 gespeichert werden. Die Auswertedaten können beispielsweise Schadgaskonzentrationen SGK, etwa CO2- und/oder Ammoniakkonzentrationen, in dem Gebäude 12, Luftfeuchtigkeiten in dem Gebäude 12 und/oder Temperaturen in dem Gebäude 12 betreffen, welche von dem gebäudeinternen Messmodul 14b der Messeinrichtung erfasst werden. Das Auswertemodul wertet den Einfluss von Steuerungsvorgaben der Steuerungseinrichtung 22 auf das Gebäudeklima, also auf die Auswertedaten, aus. Das Gebäudeklimasteuersystem 10 kann somit selbstlernend sein und die Steuerungsvorgaben auf Grundlage der Auswertung des Auswertemoduls selbsttätig anpassen. Die Steuerungsvorgaben können auch in der Datenbank 32 gespeichert sein, sodass die Steuerungseinrichtung 22, beispielsweise nach Anpassung von Steuerungsvorgaben, diese von der Datenbank 32 abrufen kann. Das Steuerungsmodul 26 ist über das Internet mit der Datenbank 32 verbunden und kann somit auch die Messwerte des Messmoduls 14a auf der Datenbank 32 ablegen und/oder thermophasenspezifische Steuerungsvorgaben von der Datenbank 32 abrufen.

Die von der Steuerungseinrichtung 22 umgesetzten Steuerungsvorgaben können ferner über ein mobiles Endgerät durch einen Bediener angepasst werden. Das mobile Endgerät 30 kann beispielsweise ein Mobilfunkgerät oder ein Tablet sein. Über das mobile Endgerät 30 kann der Bediener auch mittels der Messeinrichtung 14a, 14b erfasste Wetterparameter T, WI, N in der Umgebung des Gebäudes 12, Temperaturen innerhalb des Gebäudes 12, Schadgaskonzentrationen SGK innerhalb des Gebäudes 12 und/oder Luftfeuchtigkeiten innerhalb des Gebäudes 12 von der Datenbank 32 abrufen.

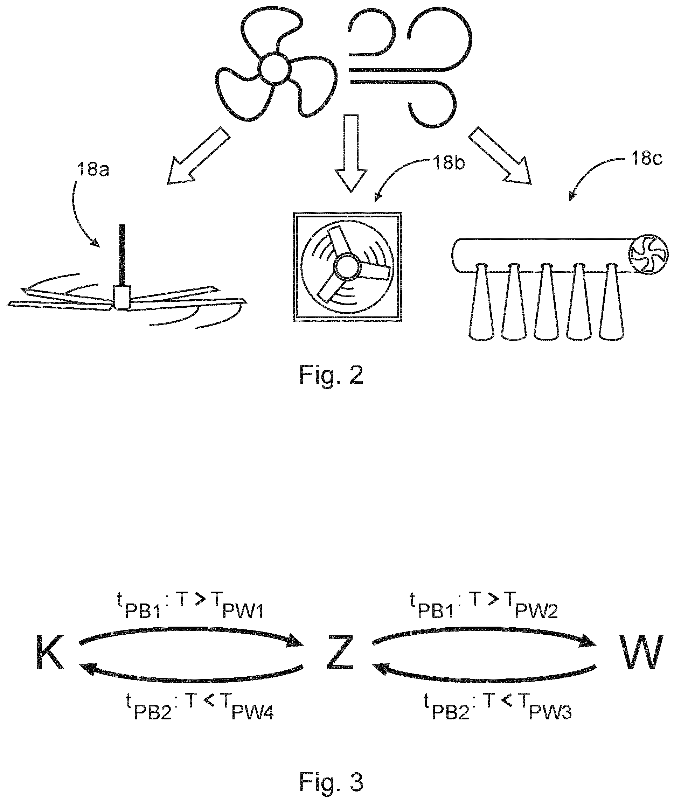

Die Fig. 2 zeigt, dass die Klimakonditioniereinrichtung 18 einen oder mehrere motorisch antreibbare Deckenventilatoren 18a, einen oder mehreren motorisch antreibbare Axialventilatoren 18b und einen oder mehrere in ein Schlauchlüftungssystem integrierte Ventilatoren 18c umfassen kann. Über die Ventilatoren 18a-18c kann Zuluft, ein gebäudeinterner Luftstrom und/oder die Umluft im Gebäude 12 gesteuert werden.

Die Fig. 3 zeigt, dass die aktuelle Klimasituation beim Steuern des Gebäudeklimas von der Steuerungseinrichtung 22 einer von mehreren Thermophasen K, Z, W zugeordnet wird. Die Zuordnung der aktuellen Klimasituation zu einer der mehreren Thermophasen K, Z, W erfolgt in Abhängigkeit von über Phasenbestimmungszeiträume t_{PB1}, t_{PB2} erfassten Wetterparametern, nämlich den über die Phasenbestimmungszeiträume t_{PB1}, t_{PB2} erfassten Temperaturwerte in der Umgebung des Gebäudes 12.

Die Steuerungseinrichtung steuert die Klimakonditioniereinrichtungen 16, 18, 20 dann in Abhängigkeit der der aktuellen Klimasituation zugeordneten Thermophase K, Z, W unter Berücksichtigung von thermophasenspezifischen Steuerungsvorgaben SV_{K}, SV_{Z}, SV_{W}. Die thermophasenabhängige Gebäudeklimatisierung erlaubt eine vorausschauende Ansteuerung der Klimakonditioniereinrichtungen 16, 18, 20 auf Grundlage eines Wetterdatenverlaufs. Im Rahmen der Erstinstallation des Gebäudeklimasteuersystems 10 werden die thermophasenspezifischen Steuerungsvorgaben SV_{K}, SV_{Z}, SV_{W} je nach Gebäudeausrichtung, Gebäudenutzung und anderen gebäudespezifischen Besonderheiten definiert und hinterlegt. So kann die Gebäudeklimasteuerung unter Berücksichtigung der Besonderheiten der Region, der Gebäudeart und/oder der Tierart erfolgen.

Die Steuerungseinrichtung 22 ordnet die aktuelle Klimasituation einer Kaltphase K, einer Zwischenphase Z oder einer Warmphase W zu. Die Steuerungseinrichtung 22 überwacht zum Zuordnen der aktuellen Klimasituation zu einer Thermophase K, Z, W Überschreitungen und Unterschreitungen von Phasenwechseltemperaturen T_{PW1}-T_{PW4} durch die während der Phasenbestimmungszeiträume t_{PB1}, t_{PB2} erfassten Temperaturwerte in der Umgebung des Gebäudes 12.

Ausgehend von der Kaltphase K wird die aktuelle Klimasituation beispielsweise der Zwischenphase Z zugeordnet, wenn die Temperatur T in der Umgebung des Gebäudes 12 eine erste Phasenwechseltemperatur T_{PW1} kontinuierlich während eines ersten Phasenbestimmungszeitraums t_{PB1} überschreitet. Die erste Phasenwechseltemperatur liegt beispielsweise in einem Bereich zwischen 0 °C und 10 °C, beispielsweise bei 5 °C. Der erste Phasenbestimmungszeitraum t_{PB1} liegt beispielsweise in einem Bereich zwischen 24 Stunden und 72 Stunden, beispielsweise bei 28 Stunden.

Ausgehend von der Zwischenphase Z wird die aktuelle Klimasituation beispielsweise der Warmphase W zugeordnet, wenn die Temperatur T in der Umgebung des Gebäudes 12 eine zweite Phasenwechseltemperatur T_{PW2} kontinuierlich während des Phasenbestimmungszeitraums t_{PB1} überschreitet. Die zweite Phasenwechseltemperatur T_{PW2} liegt vorzugsweise in einem Bereich zwischen 10 °C und 20 °C, beispielsweise bei 15 °C.

Ausgehend von der Warmphase W wird die aktuelle Klimasituation beispielsweise der Zwischenphase Z zugeordnet, wenn die Temperatur T in der Umgebung des Gebäudes 12 eine dritte Phasenwechseltemperatur T_{PW3} kontinuierlich während eines zweiten Phasenbestimmungszeitraums t_{PB2} unterschreitet. Die dritte Phasenwechseltemperatur T_{PW3} liegt vorzugsweise in einem Bereich zwischen 7 °C und 17 °C, beispielsweise bei 12 °C. Der zweite Phasenbestimmungszeitraum t_{PB2} liegt vorzugsweise in einem Bereich zwischen 3 Stunden und 12 Stunden, beispielsweise bei 8 Stunden.

Ausgehend von der Zwischenphase Z wird die aktuelle Klimasituation beispielsweise der Kaltphase K zugeordnet, wenn die Temperatur T in der Umgebung des Gebäudes 12 eine vierte Phasenwechseltemperatur T_{PW4} kontinuierlich während des Phasenbestimmungszeitraums t_{PB2} unterschreitet. Die vierte Phasenwechseltemperatur T_{PW4} liegt vorzugsweise in einem Bereich zwischen 3 °C und -7 °C, beispielsweise bei -2 °C.

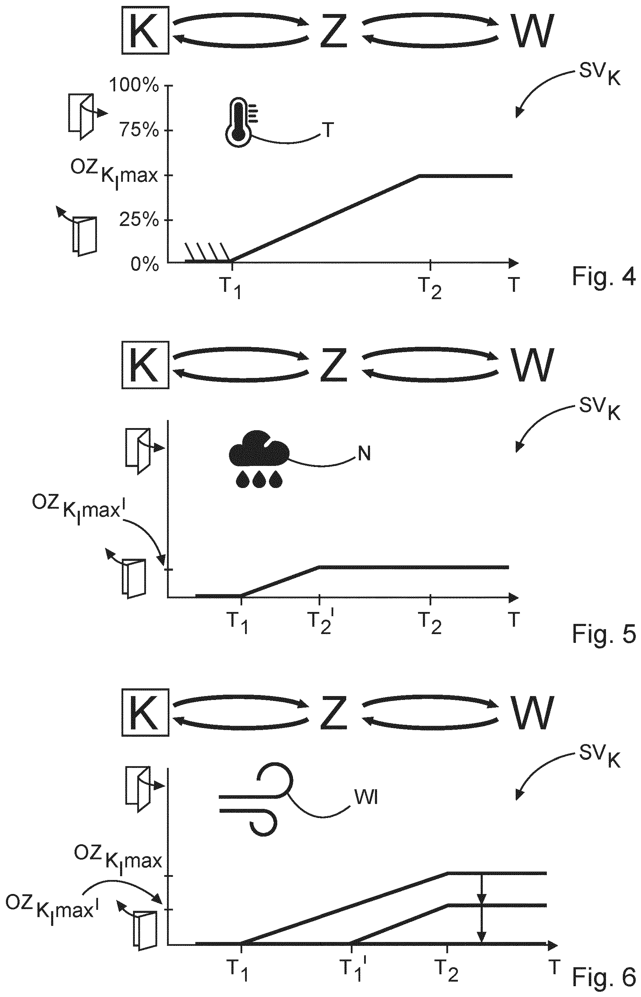

Die Fig. 4 bis 35 zeigen thermophasenspezifische Steuerungsvorgaben SV_{K}, SV_{Z}, SV_{W}, welche den Klimakonditioniereinrichtungen 16, 18a-18c von der aktuellen Temperatur T in der Umgebung des Gebäudes 12 abhängige thermophasenspezifische Soll-Zustände vorgeben.

Die Fig. 4 bis 13 beziehen sich auf Steuerungsvorgaben SV_{K} für die Kaltphase K.

Die Fig. 4 zeigt, dass der als Seitenlüftungsvorrichtung ausgebildeten Klimakonditioniereinrichtung 18 mit steigender Temperatur T zunehmend geöffnet werden soll. Ab dem Temperaturwert T₁ wird der Öffnungsvorgang eingeleitet. Die Temperatur T₁ kann beispielsweise -10 °C betragen. Der Öffnungssollzustand steigt mit zunehmender Temperatur bis zum Wert T₂ an, sodass sich bei der Temperatur T₂ der Kaltphasenmaximalöffnungszustand OZ_{K,max} einstellt, welcher bei ca. 50 % liegt. Die Temperatur T₂ liegt beispielsweise bei 3 °C. Unterhalb der Temperatur T₁ kann eine zyklische Stoßlüftung erfolgen.

Die Fig. 5 zeigt, dass die Steuerungseinrichtung 22 den Kaltphasenmaximalöffnungszustand niederschlagsbedingt auf den Wert OZ_{K,max}' verringert hat. Der Maximalöffnungszustand wird von der Steuerungseinrichtung 22 niederschlagsbedingt beispielsweise erst beim Erfassen eines Windstärkenschwellwertes verringert, wobei der Windstärkenschwellwert beispielsweise bei 3 m/s liegen kann. Bei der niederschlagsbedingten Reduzierung des Kaltphasenmaximalöffnungszustands der Seitenlüftungsvorrichtung kann auch die Windrichtung und die Position und/oder Ausrichtung der Seitenlüftungsvorrichtung berücksichtigt werden.

Die Fig. 6 zeigt, dass der Kaltphasenmaximalöffnungszustand OZ_{K,max} von der Steuerungseinrichtung 22 windbedingt mehrstufig herabgesetzt werden kann. Bei Überschreitung eines ersten Windgeschwindigkeitsgrenzwerts wird der Kaltphasenmaximalöffnungszustand vom Wert OZ_{K,max} auf den Wert OZ_{K,max}' verringert. Der erste Windgeschwindigkeitsgrenzwert kann beispielsweise bei 3 m/s liegen. Bei Überschreitung eines zweiten Windgeschwindigkeitsgrenzwerts, beispielsweise 6 m/s, kann die Steuerungseinrichtung 22 zum Sturmschutz das Öffnen der Seitenlüftungsvorrichtung gänzlich verhindern.

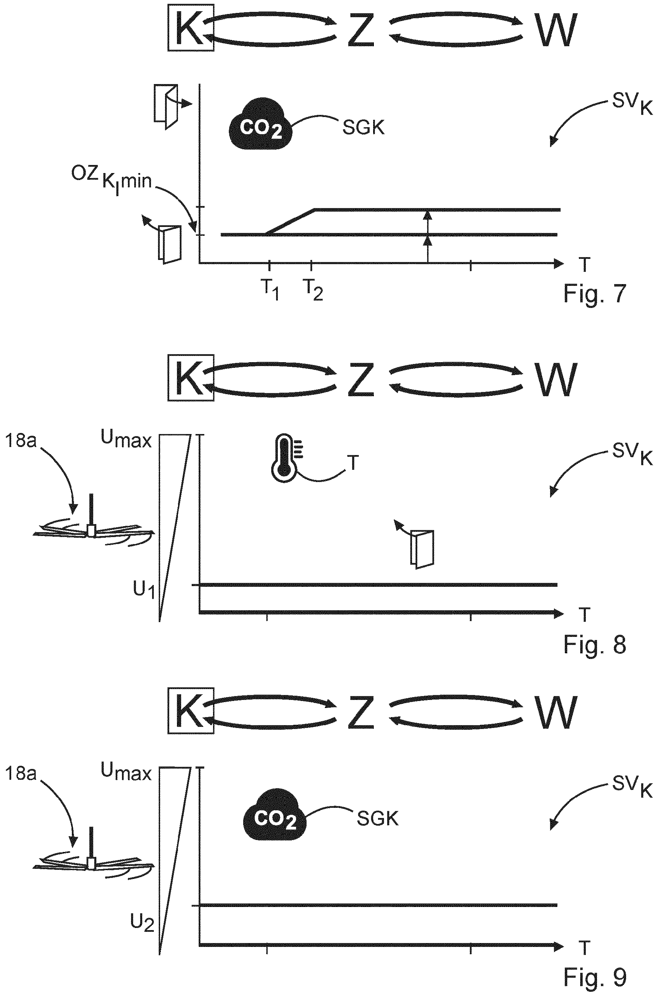

Die Fig. 7 zeigt, dass die Steuerungseinrichtung 22 ein schadgasbedingtes Öffnen der Seitenlüftungsvorrichtung veranlasst, wenn die Schadgaskonzentration SGK einen Schwellwert überschreitet. Insofern kann die Steuerungseinrichtung 22 temperaturbedingte, niederschlagsbedingte und/oder windbedingte Steuerungsvorgaben vernachlässigen, sodass die schadgasbedingte Steuerung der Seitenlüftungsvorrichtung priorisiert wird. Somit veranlasst die Steuerungseinrichtung 22 auch bei starkem Regen und mäßigem Wind in der Kaltphase das Öffnen der Seitenlüftungsvorrichtung zum Abführen von Schadgasen. In der Steuerhierarchie kann die schadgasbedingte Steuerung der Seitenlüftungsvorrichtung nur zum Zwecke des Sturmschutzes außer Kraft gesetzt werden. Insofern veranlasst die Steuerungseinrichtung bei Detektion von sehr hohen Windgeschwindigkeiten das Schließen der Seitenlüftungsvorrichtung, obwohl Schadgas vorliegt. Bei Detektion einer Überschreitung eines Windgeschwindigkeitsgrenzwerts wird zur Gewährleistung einer ausreichenden Schadgasabfuhr der Kaltphasenminimalöffnungszustand OZ_{K,min} nicht unterschritten.

Die Fig. 8 zeigt eine Steuerungsvorgabe SV_{K} für einen Deckenventilator 18a eines Gebäudeklimasteuersystems 10. Unabhängig von der Temperatur T in der Umgebung des Gebäudes 12 soll der Deckenventilator 18a ausgeschaltet bleiben. Nur wenn die Seitenlüftungsvorrichtung geöffnet ist, soll der Deckenventilator 18a mit einer Drehzahl U₁ laufen, welche unterhalb der Maximaldrehzahl Uₘₐₓ liegt.

Die Fig. 9 zeigt, dass bei Detektion einer Grenzwertüberschreitung der Schadgaskonzentration SGK durch die Steuerungseinrichtung 22 an dem Deckenventilator 18a eine Drehzahl U₂ eingestellt wird. Hierdurch wird der Schadgasabtransport begünstigt.

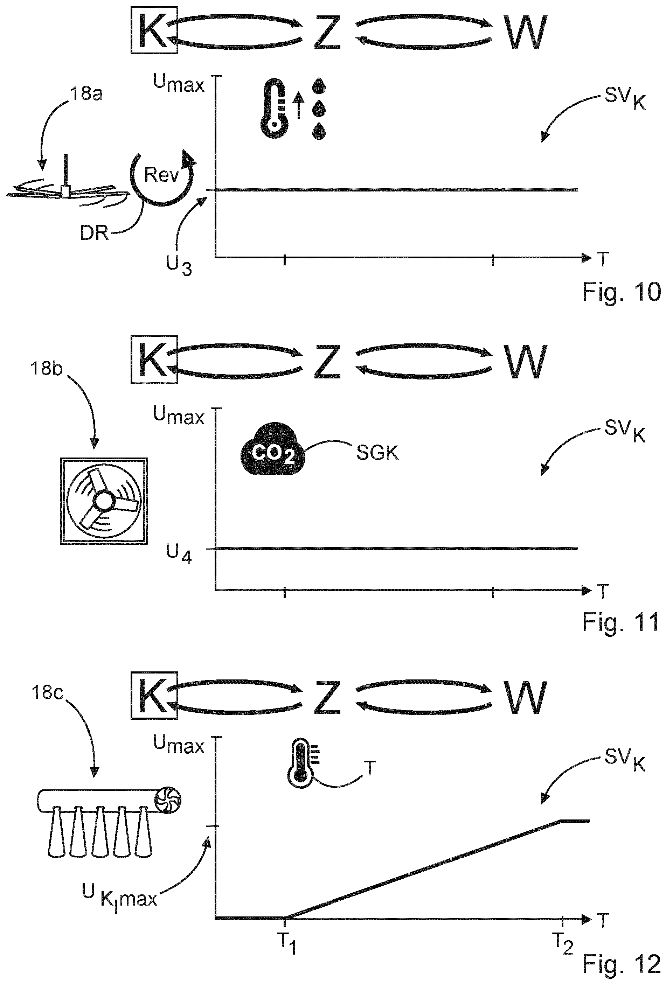

Die Fig. 10 zeigt eine Steuerungsvorgabe SV_{K}, welche die aktuelle Taugefahr berücksichtigt. Wenn die Spitzentemperatur in einem zurückliegenden Zeitfenster, beispielsweise von 8 Stunden, eine zu hohe Temperaturdifferenz zu der aktuellen Umgebungstemperatur, beispielsweise mehr als 8 Kelvin, aufweist, wird die Drehrichtung DR des Deckenventilators 18a umgekehrt und eine spezifische Drehzahl U₃ eingestellt.

Die Fig. 11 zeigt, dass die Steuerungseinrichtung 22 bei Detektion einer spezifischen Schadgaskonzentration SGK einen Axialventilator 18b des Gebäudeklimasteuersystems 10 so ansteuert, dass sich die Drehzahl U₄ einstellt.

Die Fig. 12 zeigt die temperaturabhängige Drehzahlsteuerung eines in ein Schlauchlüftungssystem integrierten Ventilators 18c. Ab dem Temperaturwert T₁ soll mit steigender Temperatur die Drehzahl des Ventilators 18c erhöht werden, bis bei der Temperatur T₂ die Drehzahl U_{K,max} erreicht ist.

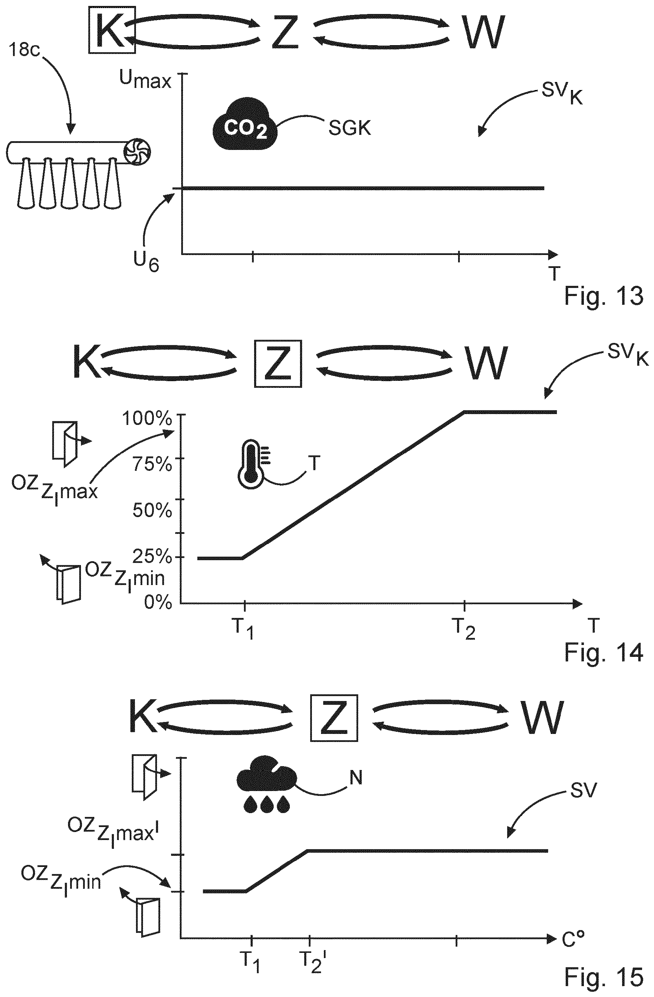

Die Fig. 13 zeigt, dass bei Detektion einer spezifischen Schadgaskonzentration SGK am Ventilator 18c durch die Steuerungseinrichtung 22 eine spezifische Drehzahl U₆ eingestellt wird, sodass das Schadgas abtransportiert wird.

Die Fig. 14 bis 26 beziehen sich auf Steuerungsvorgaben SV_{Z} für die Zwischenphase Z.

Die Fig. 14 zeigt, dass die Steuerungseinrichtung 22 in der Zwischenphase Z die Seitenlüftungsvorrichtung auch unterhalb einer Temperatur T₁ in einem geöffneten Zwischenphasenmindestöffnungszustand OZ_{Z,min} hält. Bei Überschreitung der Temperatur T₁ wird die Seitenlüftungsvorrichtung weiter geöffnet, bis der Zwischenphasenmaximalöffnungszustand OZ_{Z,max} bei der Temperatur T₂ erreicht ist.

Die Fig. 15 zeigt, dass die Steuerungseinrichtung 22 in der Zwischenphase Z eine niederschlagsbedingte Anpassung des Zwischenphasenmaximalöffnungszustands auf den Wert OZ_{Z,max}' vornimmt. Hierbei berücksichtigt die Steuerungseinrichtung 22 auch die Windrichtung, die Windstärke und die Ausrichtung der Seitenlüftungsvorrichtung.

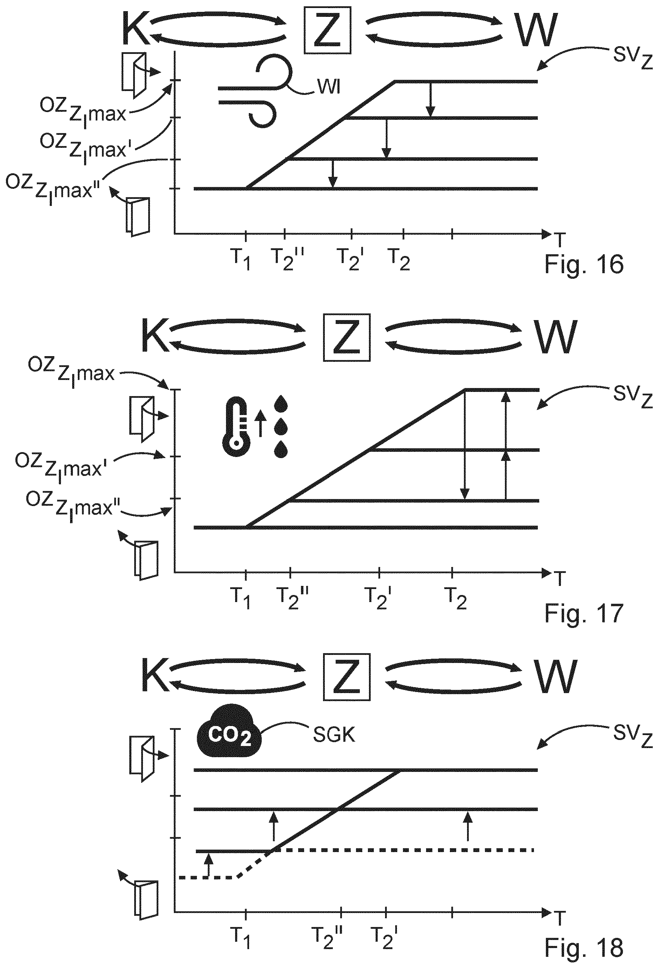

Wie in der Fig. 16 dargestellt, veranlasst die Steuerungseinrichtung 22 in der Zwischenphase eine mehrstufige windbedingte Anpassung des Zwischenphasenmaximalöffnungszustands OZ_{Z,max}. Bei Überschreitung eines ersten Windgeschwindigkeitsgrenzwerts kann der Zwischenphasenmaximalöffnungszustand auf den Wert OZ_{Z,max}' begrenzt werden, welche sich bei der Temperatur T_{2'} einstellt. Bei Überschreitung eines weiteren Windstärkengrenzwertes kann Zwischenphasenmaximalöffnungszustand der Seitenlüftungsvorrichtung weiter auf den Wert OZ_{Z,max}" reduziert werden, welcher sich bei der Temperatur T₂" einstellt.

Die Fig. 17 zeigt eine taugefahrbedingte Steuerung der Seitenlüftungsvorrichtung in der Zwischenphase. Wenn die Taubildung erkannt wird, wird der Zwischenphasenmaximalöffnungszustand auf den Wert OZ_{Z,max}" verringert. Im Anschluss daran erfolgt eine schrittweise Erhöhung des Zwischenphasenmaximalöffnungszustands nach einer ersten Zeitdauer auf den Wert OZ_{Z,max}' und nach einer weiteren Zeitdauer auf den Wert OZ_{Z,max}.

Die Fig. 18 zeigt eine schadgasbedingte Steuerung der Seitenlüftungsvorrichtung. Hierbei kann die Steuerungseinrichtung 22, je nach Windgeschwindigkeit und Windrichtung unter Berücksichtigung der Ausrichtung der Seitenlüftungsvorrichtung 16, unterschiedliche Öffnungszustände an der Seitenlüftungsvorrichtung einstellen.

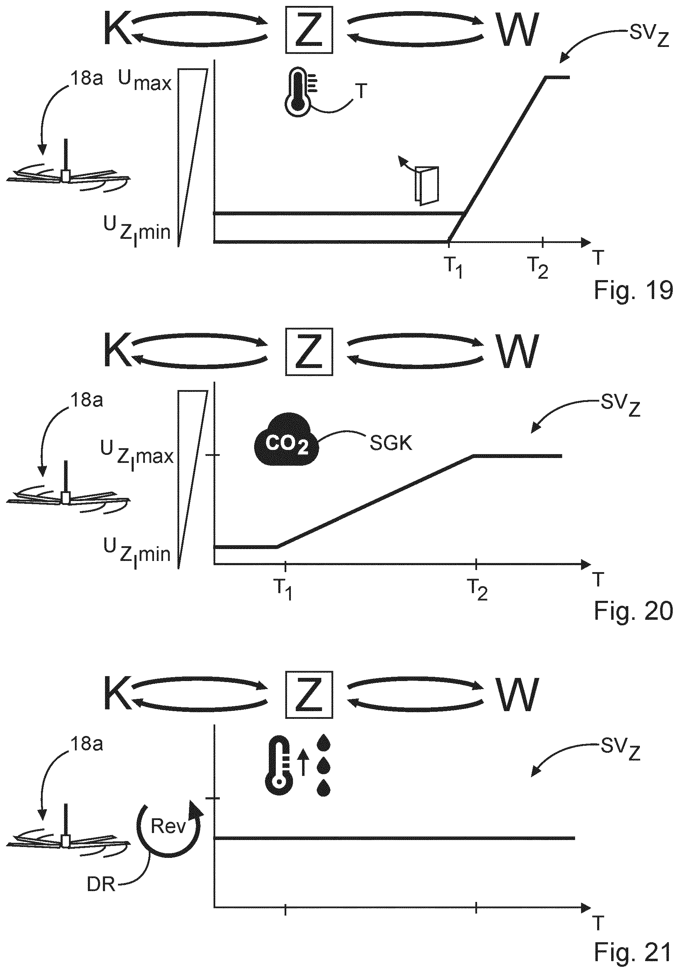

Die Fig. 19 zeigt, dass der Deckenventilator 18a in der Zwischenphase Z unterhalb einer Temperatur T₁ ausgeschaltet bleibt. Nur wenn die Seitenlüftungsvorrichtung einen gewissen Öffnungszustand überschreitet, wird am Deckenventilator 18a die Drehzahl U_{Z,min} eingestellt. Bei Überschreitung der Temperatur T₁ wird die Drehzahl des Deckenventilators 18a kontinuierlich bis zum Erreichen des Temperaturwerts T₂ erhöht.

Die Fig. 20 zeigt die schadgasbedingte Ansteuerung des Deckenventilators 18a. Wenn ein Schadgasgrenzwert detektiert wird, stellt die Steuerungseinrichtung 22 am Deckenventilator 18a eine Zwischenphasenminimaldrehzahl U_{Z,min} ein. Wenn zusätzlich die detektierte Temperatur T den Temperaturgrenzwert T₁ überschreitet, wird die Drehzahl am Deckenventilator 18a erhöht, bis der Deckenventilator bei der Temperatur T₂ die Zwischenphasenmaximaldrehzahl U_{Z,max} erreicht.

Die Fig. 21 zeigt, dass auch in der Zwischenphase Z bei Feststellung einer Taugefahr die Drehrichtung DR des Deckenventilators 18a umgekehrt wird und eine spezifische Drehzahl eingestellt wird.

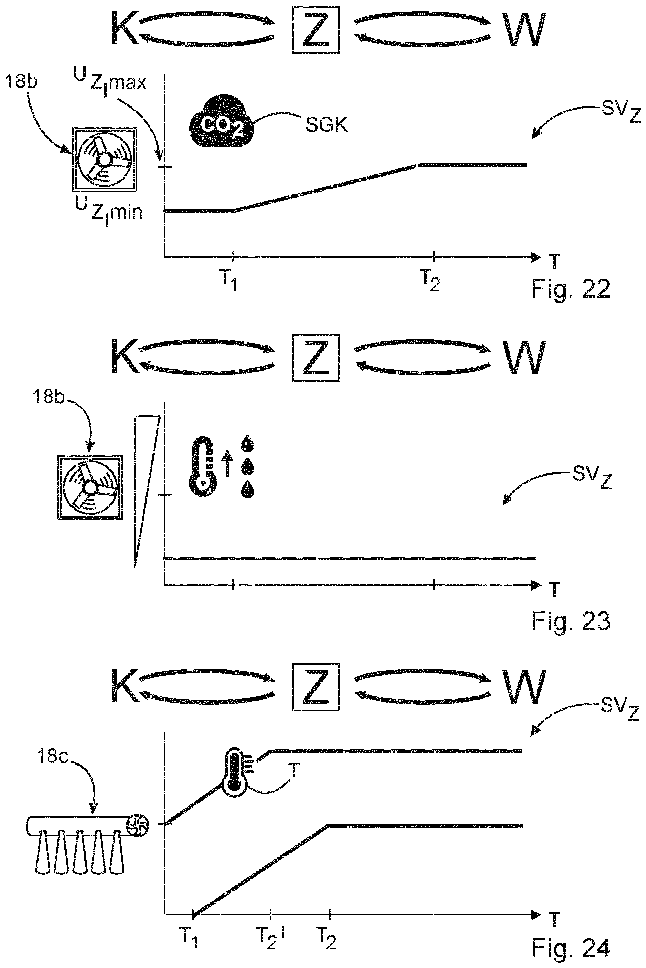

Die Fig. 22 zeigt die schadgasbedingte temperaturabhängige Steuerung der Drehzahl eines Axialventilators 18 eines Gebäudeklimasteuersystems 10. Bei Detektion einer spezifischen Schadgaskonzentration stellt die Steuerungseinrichtung 22 die Zwischenphasenminimaldrehzahl U_{Z,min} ein, wobei die Drehzahl zwischen den Temperaturen T₁ und T₂ mit steigenden Temperaturen weiter erhöht wird.

Die Fig. 23 zeigt, dass die Steuerungseinrichtung 22 beim Erfassen einer Taugefahr am Axialventilator 18b eine spezifische Drehzahl U₅ einstellt.

Die Fig. 24 zeigt, dass ein in ein Schlauchsystem integrierter Ventilator 18c des Gebäudeklimasteuersystems 10 in der Zwischenphase mit steigender Temperatur derart angesteuert wird, dass auch die Drehzahl steigt. Hierbei können zwei Drehzahlkurven unterschieden werden, nämlich einmal die Drehzahl eines Ventilators in einem Kühlungsschlauch und die Drehzahl eines Ventilators in einem Lüftungsschlauch.

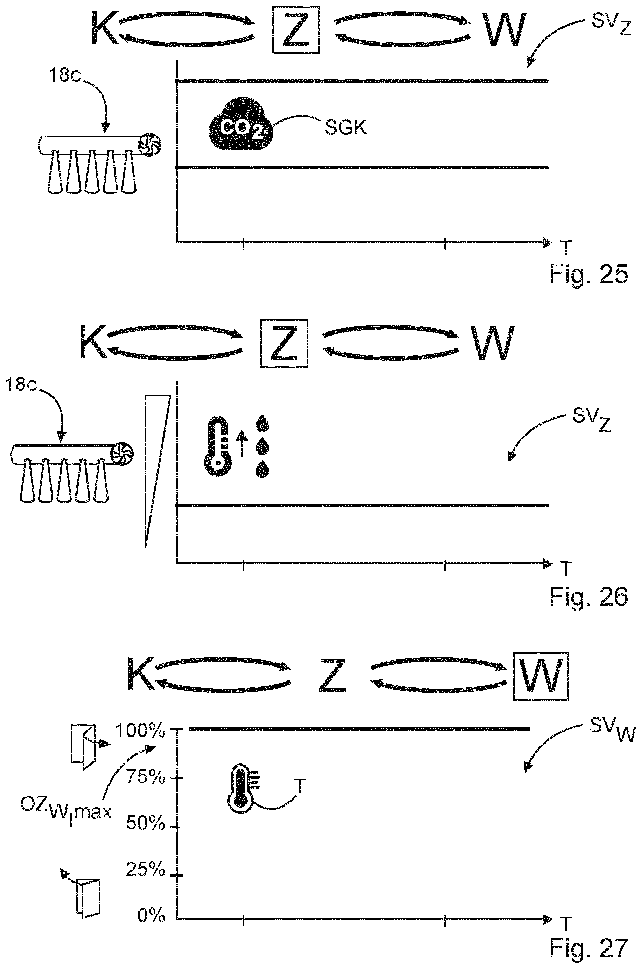

Die Fig. 25 zeigt, dass die Ventilatoren 18c in dem Schlauchsystem auch bei Überschreitung einer spezifischen Schadgaskonzentration auf spezifische Drehzahlen eingestellt werden.

Wie in der Fig. 26 dargestellt, wird der Schlauchsystemventilator 18c auch bei Ermittlung einer Taugefahr auf eine spezifische Drehzahl eingestellt.

Die Fig. 27 bis 35 betreffen Steuerungsvorgaben für die Klimakonditioniereinrichtungen in der Warmphase W.

Die Fig. 27 zeigt, dass die Seitenlüftungsvorrichtung in der Warmphase W unabhängig von der Temperatur maximal geöffnet ist, also den Warmphasenmaximalöffnungszustand OZ_{W,max} aufweist.

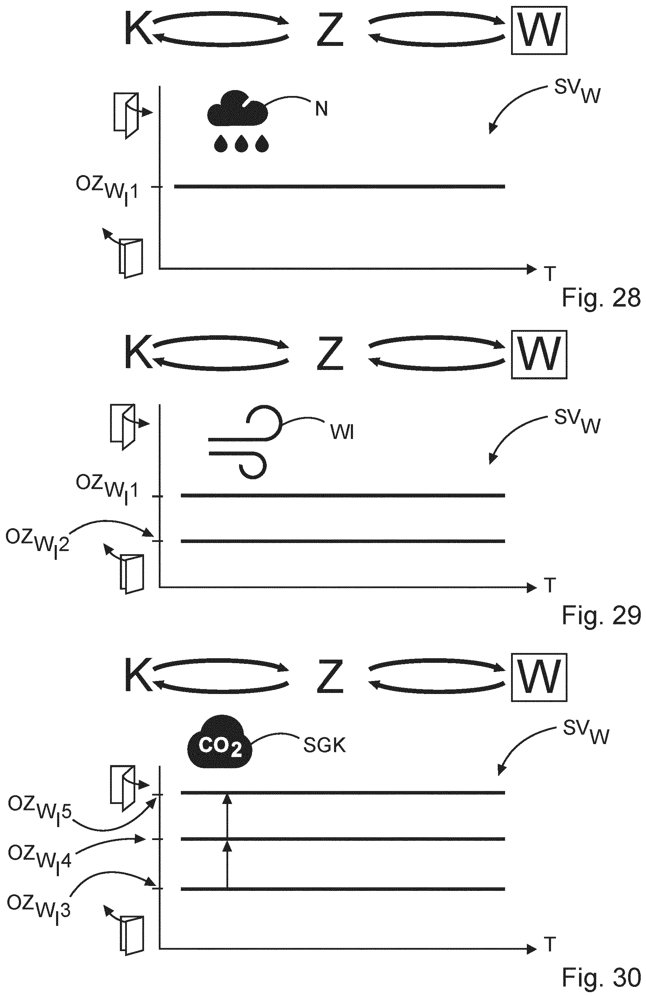

Aus der Fig. 28 geht hervor, dass eine niederschlagsbedingte Verringerung des Warmphasenmaximalöffnungszustands auf den Wert OZ_{W,1} erfolgt, wenn die Präsenz von Niederschlag N detektiert wird und die Windrichtung und die Windstärke jeweils in einem spezifischen Bereich liegen.

Die Fig. 29 zeigt die mehrstufige windbedingte Verringerung des Maximalöffnungszustands durch die Steuerungseinrichtung 22. Bei Erfassen eines ersten Windgeschwindigkeitsgrenzwerts wird zunächst der Öffnungszustand OZ_{W,1} eingestellt. Wenn der Wind weiter zunimmt und einen zweiten Grenzwert überschreitet, wird die Öffnungszustand OZ_{W,2} an der Seitenlüftungsvorrichtung eingestellt.

Die Fig. 30 zeigt die schadgasbedingte Steuerung des Öffnungszustands der Seitenlüftungsvorrichtung. Wenn die Schadgaskonzentration SGK einen ersten Grenzwert überschreitet, wird zumindest der Öffnungszustand OZ_{W,3} eingestellt. Wenn die Schadgaskonzentration einen zweiten Grenzwert überschreitet, wird zumindest der Öffnungszustand OZ_{W,4} eingestellt. Wenn die Schadgaskonzentration einen dritten Grenzwert überschreitet, wird zumindest der Öffnungszustand OZ_{W,5} eingestellt. Es kann jedoch auch vorkommen, dass die Steuerungseinrichtung die Seitenlüftungsvorrichtung weiter als die Öffnungszustände OZ_{W,3}, OZ_{W,4}, OZ_{W,5} öffnet, wenn andere Steuerungsvorgaben, welche nicht die Schadgaskonzentration SGK betreffen, dies fordern.

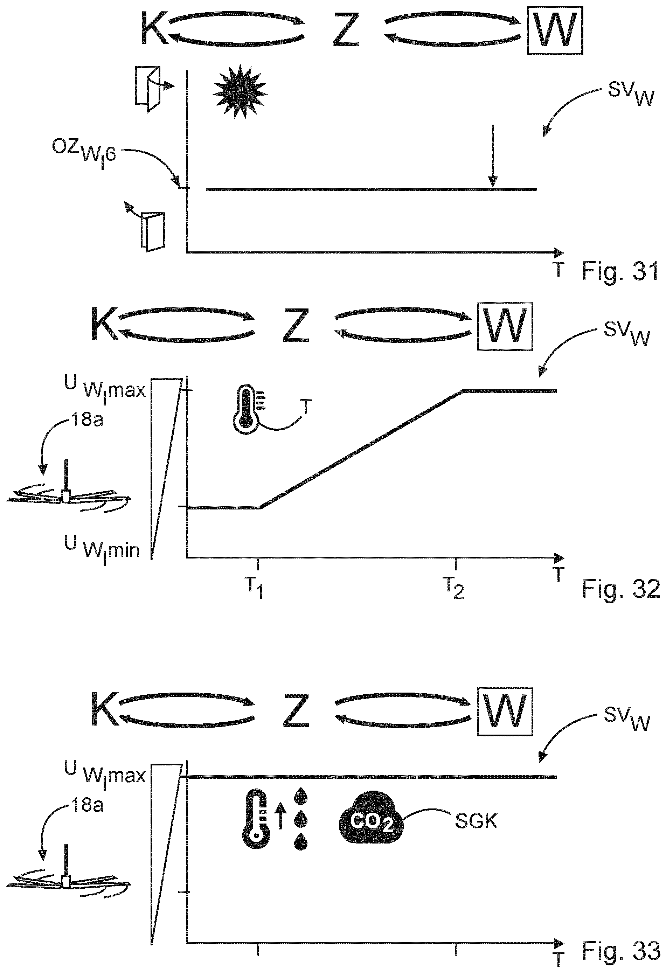

Die Fig. 31 zeigt, dass die Steuerungseinrichtung 22 auch eine Beschattungsfunktion umsetzt. Bei Erfassen einer spezifischen Lichtstärke und/oder Strahlungsintensität durch die Sonne kann die Steuerungseinrichtung 22 die Seitenlüftungsvorrichtung teilweise schließen, sodass sich der Öffnungszustand OZ_{W,6} einstellt. Hierbei wird nur in seitenlüftungsspezifischen Zeitfenstern beschattet. So kann der Sonnenstand und die Ausrichtung der Seitenlüftungsvorrichtung berücksichtigt werden.

Wie in der Fig. 32 gezeigt, wird auch in der Warmphase W eine temperaturabhängige Drehzahlsteuerung des Deckenventilators 18a umgesetzt. Unterhalb der Temperatur T₁ gibt die Steuerungseinrichtung 22 die Drehzahl UWₘᵢₙ für den Deckenventiltor 18a. Mit steigender Umgebungstemperatur wird dem Temperaturwert T₁ eine Drehzahlerhöhung für den Deckenventilator vorgegeben, bis bei der Temperatur T₂ die Maximaldrehzahl erreicht ist.

Die Fig. 33 zeigt, dass die Steuerungseinrichtung 22 in der Warmphase W auch die Schadgaskonzentration SGK und die Luftfeuchtigkeit berücksichtigt. Über die Luftfeuchtigkeit wird unter Berücksichtigung der aktuellen Temperatur der sogenannte THI-Wert (thermal-humidity-index) berechnet. Bei Erfassen einer spezifischen Schadgaskonzentration wird an dem Deckenventilator bei Überschreitung eines THI-Grenzwertes die Warmphasenmaximaldrehzahl U_{W,max} eingestellt.

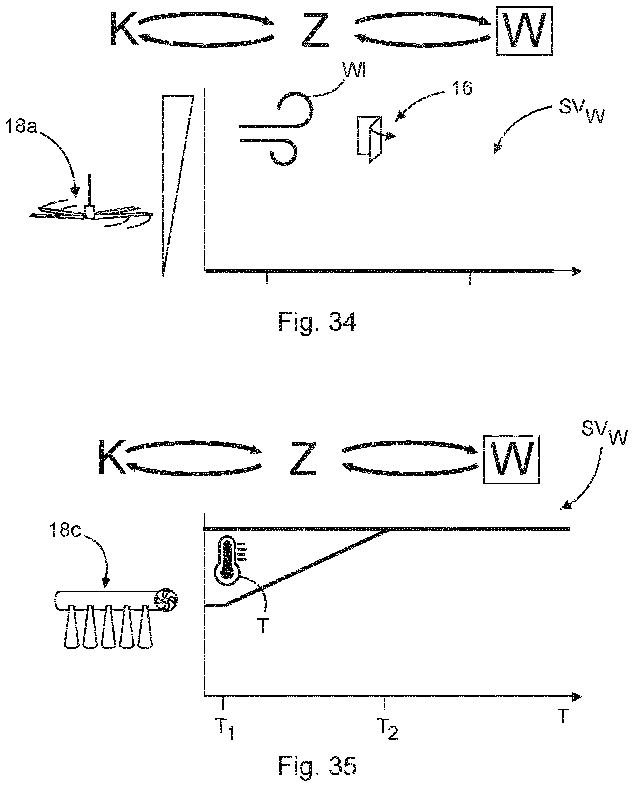

Die Fig. 34 zeigt, dass der Deckenventilator 18a in der Warmphase W bei Erfassung einer spezifischen Windsituation deaktiviert werden kann, wenn die Seitenlüftungsvorrichtung geöffnet ist.

Die Fig. 35 zeigt, dass auch in der Warmphase W eine temperaturabhängige Steuerung der Ventilatoren eines Schlauchlüftungssystems umgesetzt wird.

### Bezugszeichen

- 10: Gebäudeklimasteuersystem
- 12: Gebäude
- 14a, 14b: Messeinrichtung
- 16: Klimakonditioniereinrichtung
- 18, 18a-18c: Klimakonditioniereinrichtung
- 20: Klimakonditioniereinrichtung
- 22: Steuerungseinrichtung
- 24a-24c: Steuerungsmodule
- 26: Steuerungsmodul
- 30: mobile Endgerät
- 32: Datenbank
- 34: Gateway

- DR: Drehrichtung
- OZ_{K,max}, OZ_{K,max}': Kaltphasenmaximalöffnungszustände
- OZ_{K,min}: Kaltphasenmindestöffnungszustand
- OZ_{Z,max}, OZ_{Z,max}', OZ_{Z,max}": Zwischenphasenmaximalöffnungszustände
- OZ_{Z,min}: Zwischenphasenmindestöffnungszustand
- OZ_{W,max}: Warmphasenmaximalöffnungszustand
- OZ_{W,1}-OZ_{W,6}: Warmphasenöffnungszustände
- K: Kaltphase
- SGK: Schadgaskonzentration
- SV_{K}, SV_{Z}, SV_{W}: Steuerungsvorgaben
- t_{PB1}, t_{PB2}: Phasenbestimmungszeiträume
- T: Temperatur
- T_{PW1}-T_{PW4}: Phasenwechseltemperatur
- T₁, T₁': Temperaturen
- T₂, T₂', T₂": Temperaturen
- N: Niederschlag
- U₁-U₆: Solldrehzahlen
- U_{z,min}: Zwischenphasenminimaldrehzahl
- U_{z,max}: Zwischenphasenmaximaldrehzahl
- U_{K,max}: Kaltphasenmaximaldrehzahl
- Uₘₐₓ: Maximaldrehzahl
- W: Warmphase
- WI: Wind
- Z: Zwischenphase

## Patentansprüche

1. Verfahren zum Steuern des Gebäudeklimas eines freibelüfteten Gebäudes (12), insbesondere eines Tierstalls, mittels eines Gebäudeklimasteuersystems (10), mit den Schritten:
- sensorisches Erfassen von Wetterparametern (T, WI, N) in der Umgebung des Gebäudes (12) mittels einer Messeinrichtung (14a, 14b) des Gebäudeklimasteuersystems (10), wobei ein von der Messeinrichtung (14a, 14b) erfasster Wetterparameter (T, WI, N) die Temperatur (T) in der Umgebung des Gebäudes (12) betrifft; und
- Steuern eines oder mehrerer das Gebäudeklima beeinflussender Klimakonditioniereinrichtungen (16, 18, 18a-18c, 20) des Gebäudes (12) mittels einer Steuerungseinrichtung (22) des Gebäudeklimasteuersystems (10) in Abhängigkeit der sensorisch erfassten Wetterparameter (T, N, WI),
wobei die Steuerungseinrichtung (22) in Abhängigkeit von über zumindest einen zurückliegenden Phasenbestimmungszeitraum (t_{PB1}, t_{PB2}) erfassten Wetterparametern (T, WI, N) die aktuelle Klimasituation einer von mehreren vorgegebenen Thermophasen (K, Z, W) zuordnet und die eine oder die mehreren Klimakonditioniereinrichtungen (16, 18, 18a-18c, 20) in Abhängigkeit der der aktuellen Klimasituation zugeordneten Thermophase (K, Z, W) unter Berücksichtigung von thermophasenspezifischen Steuerungsvorgaben (SV_{K}, SV_{Z}, SV_{W}) steuert;
**dadurch gekennzeichnet, dass** die Steuerungseinrichtung (22) zum Zuordnen der aktuellen Klimasituation zu einer Thermophase (K, Z, W) Überschreitungen und/oder Unterschreitungen von Phasenwechseltemperaturen (T_{PW1}-T_{PW4}) durch die während des Phasenbestimmungszeitraums (t_{PB1}, t_{PB2}) erfassten Temperaturwerte in der Umgebung des Gebäudes (12) überwacht.

2. Verfahren nach Anspruch 1,
**dadurch gekennzeichnet, dass** die Steuerungseinrichtung (22) die aktuelle Klimasituation einer von zumindest drei vorgegebenen Thermophasen (K, Z, W) zuordnet.

3. Verfahren nach einem der vorstehenden Ansprüche,
**dadurch gekennzeichnet, dass** zumindest eine der von der Steuerungseinrichtung (22) gesteuerten Klimakonditioniereinrichtungen (16, 18, 18a-18c, 20) des Gebäudes (12) eine motorisch antreibbare Seitenlüftungsvorrichtung, insbesondere eine elektromotorisch antreibbare Wickellüftung oder ein elektromotorisch verstellbares Hubfenster, ist.

4. Verfahren nach einem der vorstehenden Ansprüche,
**dadurch gekennzeichnet, dass** die thermophasenspezifischen Steuerungsvorgaben (SV_{K}, SV_{Z}, SV_{W}) der einen oder den mehreren Klimakonditioniereinrichtungen (16, 18, 18a-18c, 20) von der aktuellen Temperatur (T) in der Umgebung des Gebäudes (12) abhängige thermophasenspezifische Sollzustände vorgeben.

5. Verfahren nach einem der vorstehenden Ansprüche,
**dadurch gekennzeichnet, dass** mittels der Messeinrichtung (14a, 14b) die Temperatur innerhalb des Gebäudes (12) erfasst wird,
wobei die thermophasenspezifischen Steuerungsvorgaben (SV_{K}, SV_{Z}, SV_{W}) der einen oder den mehreren Klimakonditioniereinrichtungen (16, 18, 18a-18c, 20) von der aktuellen Temperatur innerhalb des Gebäudes (12) abhängige thermophasenspezifische Sollzustände vorgeben.

6. Verfahren nach einem der vorstehenden Ansprüche,
**dadurch gekennzeichnet, dass** ein von der Messeinrichtung (14a, 14b) erfasster Wetterparameter (T, WI, N) die Präsenz von Niederschlag (N) und/oder die Niederschlagsmenge in der Umgebung des Gebäudes (12) betrifft,
wobei die thermophasenspezifischen Steuerungsvorgaben (SV_{K}, SV_{Z}, SV_{W}) der einen oder den mehreren Klimakonditioniereinrichtungen (16, 18, 18a-18c, 20) thermophasenspezifische Sollzustände vorgeben, welche von der aktuellen Präsenz von Niederschlag (N) und/oder der aktuellen Niederschlagsmenge in der Umgebung des Gebäudes (12) abhängig sind.

7. Verfahren nach einem der vorstehenden Ansprüche,
**dadurch gekennzeichnet, dass** ein von der Messeinrichtung (14a, 14b) erfasster Wetterparameter (T, WI, N) den Wind (WI) in der Umgebung des Gebäudes (12) betrifft,
wobei die thermophasenspezifischen Steuerungsvorgaben (SV_{K}, SV_{Z}, SV_{W}) der einen oder den mehreren Klimakonditioniereinrichtungen (16, 18, 18a-18c, 20) von dem aktuellen Wind (WI) in der Umgebung des Gebäudes (12) abhängige thermophasenspezifische Sollzustände vorgeben.

8. Verfahren nach einem der vorstehenden Ansprüche,
**dadurch gekennzeichnet, dass** mittels der Messeinrichtung (14a, 14b) Schadgasmengen oder Schadgaskonzentrationen (SGK) innerhalb des Gebäudes (12) erfasst werden,
wobei die thermophasenspezifischen Steuerungsvorgaben (SV_{K}, SV_{Z}, SV_{W}) der einen oder den mehreren Klimakonditioniereinrichtungen (16, 18, 18a-18c, 20) von der aktuellen Schadgasmenge oder von der aktuellen Schadgaskonzentrationen (SGK) innerhalb des Gebäudes (12) abhängige thermophasenspezifische Sollzustände vorgeben.

9. Verfahren nach einem der vorstehenden Ansprüche,
**dadurch gekennzeichnet, dass** mittels der Messeinrichtung (14a, 14b) die Luftfeuchtigkeit in der Umgebung und/oder innerhalb des Gebäudes (12) erfasst wird,
wobei die thermophasenspezifischen Steuerungsvorgaben (SV_{K}, SV_{Z}, SV_{W}) der einen oder den mehreren Klimakonditioniereinrichtungen (16, 18, 18a-18c, 20) von der aktuellen Luftfeuchtigkeit in der Umgebung und/oder innerhalb des Gebäudes (12) abhängige thermophasenspezifische Sollzustände vorgeben.

10. Verfahren nach einem der Ansprüche 4 bis 9,
**dadurch gekennzeichnet, dass** die vorgegeben thermophasenspezifischen Sollzustände der als Seitenlüftungsvorrichtung ausgebildeten Klimakonditioniereinrichtung (16, 18, 18a-18c, 20) deren Öffnungszustand betreffen.

11. Verfahren nach einem der vorstehenden Ansprüche,
**dadurch gekennzeichnet, dass** die thermophasenspezifischen Steuerungsvorgaben (SV_{K}, SV_{Z}, SV_{W}) einen oder mehrere thermophasenspezifische Zusammenhänge zwischen der Temperatur (T) in der Umgebung des Gebäudes (12) und Einstellwerten für die eine oder die mehreren Klimakonditioniereinrichtungen (16, 18, 18a-18c, 20) umfassen, wobei die Steuerungseinrichtung (22) die thermophasenspezifischen Zusammenhänge in vorgegebenen Wettersituationen und/oder bei vorgegebenen Gebäudeklimazuständen in vorgegebener Weise anpasst.

12. Verfahren nach einem der vorstehenden Ansprüche,
**dadurch gekennzeichnet, dass** zumindest eine der von der Steuerungseinrichtung (22) gesteuerten Klimakonditioniereinrichtungen (16, 18, 18a-18c, 20) des Gebäudes (12) ein motorisch antreibbares aktives Lüftungselement oder ein motorisch antreibbarer Ventilator ist.

13. Verfahren nach Anspruch 12,
**dadurch gekennzeichnet, dass** die vorgegebenen thermophasenspezifischen Sollzustände der als Ventilator ausgebildeten Klimakonditioniereinrichtung (16, 18, 18a-18c, 20) dessen Drehzahl und/oder Drehrichtung (DR) betreffen.

14. Verfahren nach einem der vorstehenden Ansprüche,
**dadurch gekennzeichnet, dass** mittels der Messeinrichtung (14a, 14b) die Helligkeit innerhalb des Gebäudes (12) erfasst wird,
wobei die thermophasenspezifischen Steuerungsvorgaben (SV_{K}, SV_{Z}, SV_{W}) der einen oder den mehreren Klimakonditioniereinrichtungen (16, 18, 18a-18c, 20) von der aktuellen Helligkeit innerhalb des Gebäudes (12) abhängige thermophasenspezifische Sollzustände vorgeben.

15. Verfahren nach einem der vorstehenden Ansprüche,
**dadurch gekennzeichnet, dass** zumindest eine der von der Steuerungseinrichtung (22) gesteuerten Klimakonditioniereinrichtungen (16, 18, 18a-18c, 20) des Gebäudes (12) ein Beleuchtungseinrichtung ist.

16. Verfahren nach einem der vorstehenden Ansprüche,
**dadurch gekennzeichnet, dass** mittels der Messeinrichtung (14a, 14b) erfasste Wetterparameter (T, WI, N) in der Umgebung des Gebäudes (12), Temperaturen innerhalb des Gebäudes (12), Schadgasmengen oder Schadgaskonzentrationen (SGK) innerhalb des Gebäudes (12) und/oder Luftfeuchtigkeiten in der Umgebung und/oder innerhalb des Gebäudes (12) als Auswertedaten in einer Datenbank (32) gespeichert werden, wobei ein Auswertemodul des Gebäudeklimasteuersystems (10) vorzugsweise den Einfluss der thermophasenspezifischen Steuerungsvorgaben (SV_{K}, SV_{Z}, SV_{W}) auf die Auswertedaten auswertet.

17. Verfahren nach einem der vorstehenden Ansprüche,
**dadurch gekennzeichnet, dass** thermophasenspezifischen Steuerungsvorgaben (SV_{K}, SV_{Z}, SV_{W}) über ein mobiles Endgerät (30) durch einen Bediener anpassbar sind.

18. Gebäudeklimasteuersystem (10), insbesondere für die Tierstallklimatisierung, mit
- einer Messeinrichtung (14a, 14b), welche dazu eingerichtet ist, Wetterparameter (T, WI, N) in der Umgebung eines zu klimatisierenden Gebäudes (12) sensorisch zu erfassen, wobei ein von der Messeinrichtung (14a, 14b) erfassbarer Wetterparameter (T, WI, N) die Temperatur (T) in der Umgebung des Gebäudes (12) betrifft;
- einer oder mehreren Klimakonditioniereinrichtungen (16, 18, 18a-18c, 20), welche in oder an dem Gebäude (12) positionierbar sind und mittels welchen das Gebäudeklima beeinflussbar ist; und
- einer Steuerungseinrichtung (22), welche dazu eingerichtet ist, die eine oder die mehreren Klimakonditioniereinrichtungen (16, 18, 18a-18c, 20) in Abhängigkeit der sensorisch erfassten Wetterparameter (T, WI, N) zu steuern,
wobei die Steuerungseinrichtung (22) dazu eingerichtet ist, in Abhängigkeit von über zumindest einen zurückliegenden Phasenbestimmungszeitraum (t_{PB1}, t_{PB2}) erfassten Wetterparametern (T, WI, N) die aktuelle Klimasituation einer von mehreren vorgegebenen Thermophasen (K, Z, W) zuzuordnen und die eine oder die mehreren Klimakonditioniereinrichtungen (16, 18, 18a-18c, 20) in Abhängigkeit der der aktuellen Klimasituation zugeordneten Thermophase (K, Z, W) unter Berücksichtigung von thermophasenspezifischen Steuerungsvorgaben (SV_{K}, SV_{Z}, SV_{W}) zu steuern
**dadurch gekennzeichnet, dass** die Steuerungseinrichtung (22) dazu eingerichtet ist, zum Zuordnen der aktuellen Klimasituation zu einer Thermophase (K, Z, W) Überschreitungen und/oder Unterschreitungen von Phasenwechseltemperaturen (T_{PW1}-T_{PW4}) durch die während des Phasenbestimmungszeitraums (t_{PB1}, t_{PB2}) erfassten Temperaturwerte in der Umgebung des Gebäudes (12) zu überwachen.

19. Gebäudeklimasteuersystem (10) nach Anspruch 18,
**dadurch gekennzeichnet, dass** das Gebäudeklimasteuersystem (10) dazu eingerichtet ist, das Verfahren zum Steuern des Gebäudeklimas nach einem der Ansprüche 1 bis 17 auszuführen.

## Claims

1. Method for controlling the building climate of a naturally ventilated building (12), in particular an animal barn, by means of a building climate control system (10), comprising the steps:
- sensory detection of weather parameters (T, WI, N) in the vicinity of the building (12) by means of a measuring device (14a, 14b) of the building climate control system (10), wherein a weather parameter (T, WI, N) detected by the measuring device (14a, 14b) relates to the temperature (T) in the vicinity of the building (12); and
- controlling one or more climate conditioning devices (16, 18, 18a-18c, 20) of the building (12) that influence the building climate by means of a control device (22) of the building climate control system (10) in dependency of the sensory detected weather parameters (T, N, WI),
wherein the control device (22) assigns the current climate situation to one of several predetermined thermophases (K, Z, W) depending on weather parameters (T, WI, N) detected over at least one previous phase determination period (t_{PB1}, t_{PB2}) and controls the one or more climate conditioning devices (16, 18, 18a-18c, 20) in dependence on the thermophase (K, Z, W) assigned to the current climate situation, taking into account thermophase-specific control specifications (SV_{K}, SVz, SV_{W}); **characterized in that** the control device (22) for assigning the current climate situation to a thermophase (K, Z, W) monitors exceedances and/or undershootings of phase change temperatures (T_{PW1}-T_{PW4}) by the temperature values detected during the phase determination period (t_{PB1}, t_{PB2}) in the vicinity of the building (12).

2. Method according to claim 1,
**characterized in that** the control device (22) assigns the current climate situation to one of at least three predetermined thermophases (K, Z, W).

3. Method according to one of the preceding claims,
**characterized in that** at least one of the climate conditioning devices (16, 18, 18a-18c, 20) of the building (12) controlled by the control device (22) is a motor-driven side ventilation device, in particular an electrically motor-driven roll-up ventilation device or an electrically motor-driven adjustable lift window.

4. Method according to one of the preceding claims,
**characterized in that** the thermophase-specific control specifications (SV_{K}, SV_{Z}, SV_{W}) predetermine thermophase-specific target states dependent on the current temperature (T) in the vicinity of the building (12) to the one or more climate conditioning devices (16, 18, 18a-18c, 20).

5. Method according to one of the preceding claims,
**characterized in that** the temperature within the building (12) is detected by means of the measuring device (14a, 14b),
wherein the thermophase-specific control specifications (SV_{K}, SV_{Z}, SV_{W}) of the one or more climate conditioning devices (16, 18, 18a-18c, 20) predetermine thermophase-specific target states dependent on the current temperature within the building (12).

6. Method according to one of the preceding claims,
**characterized in that** a weather parameter (T, WI, N) detected by the measuring device (14a, 14b) relates to the presence of precipitation (N) and/or the amount of precipitation in the vicinity of the building (12), wherein the thermophase-specific control specifications (SV_{K}, SV_{Z}, SV_{W}) predetermine thermophase-specific target states, which depend on the current presence of precipitation (N) and/or the current amount of precipitation in the vicinity of the building (12), to the one or more climate conditioning devices (16, 18, 18a-18c, 20).

7. Method according to one of the preceding claims,
**characterized in that** a weather parameter (T, WI, N) detected by the measuring device (14a, 14b) relates to the wind (WI) in the vicinity of the building (12),
wherein the thermophase-specific control specifications (SV_{K}, SV_{Z}, SV_{W}) predetermine thermophase-specific target states dependent on the current wind (WI) in the vicinity of the building (12) to the one or more climate conditioning devices (16, 18, 18a-18c, 20).

8. Method according to one of the preceding claims,
**characterized in that** by means of the measuring device (14a, 14b) harmful gas quantities or harmful gas concentrations (SGK) are detected within the building (12),
wherein the thermophase-specific control specifications (SV_{K}, SV_{Z}, SV_{W}) predetermine thermophase-specific target states dependent on the current harmful gas quantities or the current harmful gas concentrations (SGK) within the building (12) to the one or more climate conditioning devices (16, 18, 18a-18c, 20).

9. Method according to one of the preceding claims,
**characterized in that** by means of the measuring device (14a, 14b) the air humidity in the vicinity and/or within the building (12) is detected, wherein the thermophase-specific control specifications (SV_{K}, SV_{Z}, SV_{W}) predetermine thermophase-specific target states dependent on the current air humidity in the vicinity and/or within the building (12) to the one or more climate conditioning devices (16, 18, 18a-18c, 20).

10. Method according to one of claims 4 to 9,
**characterized in that** the predetermined thermophase-specific target states of the climate conditioning device (16, 18, 18a-18c, 20) designed as a side ventilation device relate to its opening state.

11. Method according to one of the preceding claims,
**characterized in that** the thermophase-specific control specifications (SV_{K}, SV_{Z}, SV_{W}) comprise one or more thermophase-specific relationships between the temperature (T) in the vicinity of the building (12) and setpoints for the one or more climate conditioning devices (16, 18, 18a-18c, 20), wherein the control device (22) adapts the thermophase-specific relationships in predetermined weather situations and/or at predetermined building climate states in a predetermined manner.

12. Method according to one of the preceding claims,
**characterized in that** at least one of the climate control devices (16, 18, 18a-18c, 20) of the building (12) controlled by the control device (22) is a motor-driven active ventilation element or a motor-driven fan.

13. Method according to claim 12,
**characterized in that** the predetermined thermophase-specific target states of the climate conditioning device (16, 18, 18a-18c, 20) designed as a fan relate to its rotational speed and/or direction of rotation (DR).

14. Method according to one of the preceding claims,
**characterized in that** by means of the measuring device (14a, 14b) the brightness within the building (12) is detected,
wherein the thermophase-specific control specifications (SV_{K}, SV_{Z}, SV_{W}) predetermine thermophase-specific target states dependent on the current brightness within the building (12) to the one or more climate conditioning devices (16, 18, 18a-18c, 20).

15. Method according to one of the preceding claims,
**characterized in that** at least one of the climate conditioning devices (16, 18, 18a-18c, 20) of the building (12) controlled by the control device (22) is a lighting device.

16. Method according to one of the preceding claims,
**characterized in that** weather parameters (T, WI, N) in the vicinity of the building (12), temperatures within the building (12), harmful gas quantities or harmful gas concentrations (SGK) within the building (12) and/or air humidity in the vicinity and/or within the building (12), detected by means of the measuring device (14a, 14b), are stored as evaluation data in a database (32),
wherein an evaluation module of the building climate control system (10) preferably evaluates the influence of the thermophase-specific control specifications (SV_{K}, SV_{Z}, SV_{W}) on the evaluation data.

17. Method according to one of the preceding claims,
**characterized in that** thermophase-specific control specifications (SV_{K}, SV_{Z}, SV_{W}) can be adjusted by an operator via a mobile terminal device (30).

18. Building climate control system (10), in particular for animal barn climate control, with
- a measuring device (14a, 14b), which is set up to sensorily detect weather parameters (T, WI, N) in the vicinity of a building (12) to be climate-conditioned, wherein a weather parameter (T, WI, N) detectable by the measuring device (14a, 14b) relates to the temperature (T) in the vicinity of the building (12);
- one or more climate conditioning devices (16, 18, 18a-18c, 20), which can be positioned in or at the building (12) and by means of which the building climate can be influenced; and
- a control device (22), which is set up to control the one or more climate conditioning devices (16, 18, 18a-18c, 20) depending on the sensorily-detected weather parameters (T, WI, N),
wherein the control device (22) is set up to determine, depending on the weather parameters (T, WI, N) detected over at least one previous phase determination period (t_{PB1}, t_{PB2}), to assign the current climate situation to one of several predetermined thermophases (K, Z, W) and to control the one or more climate conditioning devices (16, 18, 18a-18c, 20) in dependence on the thermophase (K, Z, W) assigned to the current climate situation, taking into account thermophase-specific control specifications (SV_{K}, SV_{Z}, SV_{W}),
**characterized in that** the control device (22) is set up to monitor exceedances and/or undershootings of phase change temperatures (T_{PW1}-T_{PW4}) by the temperature values detected during the phase determination period (t_{PB1}, t_{PB2}) in the vicinity of the building (12) for the purpose of assigning the current climate situation to a thermophase (K, Z, W).

19. Building climate control system (10) according to claim 18, **characterized in that** the building climate control system (10) is set up to carry out the method for controlling the building climate according to one of claims 1 to 17.

## Revendications

1. Procédé de commande du climat d'un bâtiment à ventilation naturelle (12), notamment d'une étable, au moyen d'un système de commande de climatisation de bâtiment (10), comprenant les étapes :
- détermination par capteurs de paramètres météorologiques régnant (T, WI, N) dans l'environnement du bâtiment (12) au moyen d'un dispositif de mesure (14a, 14b) dudit système de commande de climatisation du bâtiment (10), un paramètre météorologique (T, WI, N) déterminé par ledit dispositif de mesure (14a, 14b) concernant la température (T) régnant dans l'environnement du bâtiment (12) ; et
- commande d'un ou de plusieurs dispositifs de climatisation (16, 18, 18a-18c, 20) du bâtiment (12), qui ont une influence sur le climat du bâtiment, au moyen d'un dispositif de commande (22) du système de commande de climatisation du bâtiment (10) en fonction du paramètre météorologique déterminé par capteurs (T, N, WI),
le dispositif de commande (22) associant, en fonction des paramètres météorologiques (T, WI, N) déterminés au cours d'au moins une période de détermination de phase écoulée (t_{PB1}, t_{PB2}), la situation climatique actuelle à l'une de plusieurs phases thermiques prédéfinies (K, Z, W), et commandant le ou les plusieurs dispositifs de climatisation (16, 18, 18a-18c, 20) en fonction de la phase thermique (K, Z, W) associée à la situation climatique actuelle, en tenant compte des spécifications de commande relatives à la phase thermique (SV_{K}, SV_{Z}, SV_{W}) ;
**caractérisé en ce que**, pour associer la situation climatique actuelle à une phase thermique (K, Z, W), le dispositif de commande (22) surveille les dépassements et/ou les sous-dépassements des températures de changement de phase (T_{PW1}-T_{PW4}) par les valeurs de température déterminées dans l'environnement du bâtiment (12) pendant la période de détermination de phase (t_{PB1}, t_{PB2}).

2. Procédé selon la revendication 1,
**caractérisé en ce que** le dispositif de commande (22) associe la situation climatique actuelle à l'une d'au moins trois phases thermiques (K, Z, W) prédéfinies.

3. Procédé selon l'une quelconque des revendications précédentes,
**caractérisé en ce qu'**au moins un des dispositifs de climatisation (16, 18, 18a-18c, 20) du bâtiment (12) commandés par le dispositif de commande (22) est un dispositif d'aération latérale à entraînement motorisé, notamment une ventilation à enroulement à entraînement électromotorisé ou une fenêtre à levage réglable par moteur électrique.

4. Procédé selon l'une quelconque des revendications précédentes,
**caractérisé en ce que** les spécifications de commande (SV_{K}, SV_{Z}, SV_{W}), relatives à la phase thermique, de l'un ou des plusieurs dispositifs de climatisation (16, 18, 18a-18c, 20) définissent des états de consigne relatifs à la phase thermique qui dépendent de la température actuelle (T) régnant dans l'environnement du bâtiment (12).

5. Procédé selon l'une quelconque des revendications précédentes,
**caractérisé en ce que** le dispositif de mesure (14a, 14b) permet de déterminer la température régnant à l'intérieur du bâtiment (12),
les spécifications de commande (SV_{K}, SV_{Z}, SV_{W}), relatives à la phase thermique, de l'un ou des plusieurs dispositifs de climatisation (16, 18, 18a-18c, 20) définissant des états de consigne relatifs à la phase thermique qui dépendent de la température actuelle régnant à l'intérieur du bâtiment (12).

6. Procédé selon l'une quelconque des revendications précédentes,
**caractérisé en ce qu'**un paramètre météorologique (T, WI, N) déterminé par le dispositif de mesure (14a, 14b) concerne la présence de précipitations (N) et/ou la quantité de précipitations dans l'environnement du bâtiment (12),
les spécifications de commande (SV_{K}, SV_{Z}, SV_{W}), relatives à la phase thermique, de l'un ou des plusieurs dispositifs de climatisation (16, 18, 18a-18c, 20) définissant des états de consigne relatifs à la phase thermique qui dépendent de la présence actuelle de précipitations (N) et/ou de la quantité actuelle de précipitations dans l'environnement du bâtiment (12).

7. Procédé selon l'une quelconque des revendications précédentes,
**caractérisé en ce qu'**un paramètre météorologique (T, WI, N) déterminé par le dispositif de mesure (14a, 14b) concerne le vent (WI) dans l'environnement du bâtiment (12),
les spécifications de commande (SV_{K}, SV_{Z}, SV_{W}), relatives à la phase thermique, de l'un ou des plusieurs dispositifs de climatisation (16, 18, 18a-18c, 20) définissant des états de consigne relatifs à la phase thermique qui dépendent du vent actuel (WI) dans l'environnement du bâtiment (12).

8. Procédé selon l'une quelconque des revendications précédentes,
**caractérisé en ce que** le dispositif de mesure (14a, 14b) permet de déterminer des quantités de gaz nocifs ou des concentrations en gaz nocifs (SGK) à l'intérieur du bâtiment (12),
les spécifications de commande (SV_{K}, SV_{Z}, SV_{W}), relatives à la phase thermique, de l'un ou des plusieurs dispositifs de climatisation (16, 18, 18a-18c, 20) définissant des états de consigne relatifs à la phase thermique qui dépendent de la quantité actuelle de gaz nocifs ou des concentrations actuelles en gaz nocifs (SGK) à l'intérieur du bâtiment (12).

9. Procédé selon l'une quelconque des revendications précédentes,
**caractérisé en ce que** le dispositif de mesure (14a, 14b) permet de déterminer l'humidité de l'air régnant dans l'environnement et/ou à l'intérieur du bâtiment (12),
les spécifications de commande (SV_{K}, SV_{Z}, SV_{W}), relatives à la phase thermique, de l'un ou des plusieurs dispositifs de climatisation (16, 18, 18a-18c, 20) définissant des états de consigne relatifs à la phase thermique qui dépendent de l'humidité de l'air actuelle régnant dans l'environnement et/ou à l'intérieur du bâtiment (12).

10. Procédé selon l'une quelconque des revendications 4 à 9,
**caractérisé en ce que** les états de consigne, relatifs à la phase thermique, du dispositif de climatisation (16, 18, 18a-18c, 20) conçu sous forme de dispositif d'aération latérale concernent son état d'ouverture.

11. Procédé selon l'une quelconque des revendications précédentes,
**caractérisé en ce que** les spécifications de commande (SV_{K}, SV_{Z}, SV_{W}), relatives à la phase thermique, comprennent un ou plusieurs rapports, relatifs à la phase thermique, entre la température (T) régnant dans l'environnement du bâtiment (12) et des valeurs de réglage pour le ou les plusieurs dispositifs de climatisation (16, 18, 18a-18c, 20), le dispositif de commande (22) ajustant de manière prédéfinie les rapports relatifs à la phase thermique, dans des situations météorologiques prédéfinies et/ou en cas d'états climatiques du bâtiment prédéfinis.

12. Procédé selon l'une quelconque des revendications précédentes,
**caractérisé en ce qu'**au moins un des dispositifs de climatisation (16, 18, 18a-18c, 20) du bâtiment (12) commandés par le dispositif de commande (22) est un élément d'aération actif à entraînement motorisé ou un ventilateur à entraînement motorisé.

13. Procédé selon la revendication 12,
**caractérisé en ce que** les états de consigne prédéfinis, relatifs à la phase thermique, du dispositif de climatisation (16, 18, 18a-18c, 20) conçu sous forme de ventilateur concernent sa vitesse de rotation et/ou son sens de rotation (DR).

14. Procédé selon l'une quelconque des revendications précédentes,
**caractérisé en ce que** le dispositif de mesure (14a, 14b) permet de déterminer la luminosité régnant à l'intérieur du bâtiment (12),
les spécifications de commande (SV_{K}, SV_{Z}, SV_{W}), relatives à la phase thermique, de l'un ou des plusieurs dispositifs de climatisation (16, 18, 18a-18c, 20) définissant des états de consigne relatifs à la phase thermique qui dépendent de la luminosité actuelle régnant à l'intérieur du bâtiment (12).

15. Procédé selon l'une quelconque des revendications précédentes,
**caractérisé en ce qu'**au moins un des dispositifs de climatisation (16, 18, 18a-18c, 20) du bâtiment (12) commandés par le dispositif de commande (22) est un dispositif d'éclairage.

16. Procédé selon l'une quelconque des revendications précédentes,
**caractérisé en ce que** des paramètres météorologiques (T, WI, N) déterminés au moyen du dispositif de mesure (14a, 14b) dans l'environnement du bâtiment (12), les températures régnant à l'intérieur du bâtiment (12), quantités de gaz nocifs ou concentrations en gaz nocifs (SG) à l'intérieur du bâtiment (12), et/ou les humidités régnant dans l'environnement et/ou à l'intérieur du bâtiment (12) sont enregistrées sous forme de données d'analyse dans une banque de données (32),
un module d'analyse du système de commande de climatisation du bâtiment (10) analysant de préférence l'impact des spécifications de commande (SV_{K}, SV_{Z}, SV_{W}) relatives à la phase thermique sur les données d'analyse.

17. Procédé selon l'une quelconque des revendications précédentes,
**caractérisé en ce que** des spécifications de commande (SV_{K}, SV_{Z}, SV_{W}) relatives à la phase thermique peuvent être ajustées par un opérateur sur un terminal (30) mobile.

18. Système de commande de climatisation de bâtiment (10), notamment pour la climatisation d'étables, comprenant
- un dispositif de mesure (14a, 14b), destiné à déterminer par capteurs des paramètres météorologiques (T, WI, N) régnant dans l'environnement d'un bâtiment (12) à climatiser, un paramètre météorologique (T, WI, N) déterminé par ledit dispositif de mesure (14a, 14b) concernant la température (T) régnant dans l'environnement du bâtiment (12) ;
- un ou plusieurs dispositifs de climatisation (16, 18, 18a-18c, 20) qui peuvent être positionnés dans ou à proximité du bâtiment (12) et qui permettent d'avoir une influence sur le climat dudit bâtiment ; et
- un dispositif de commande (22) qui est conçu pour commander ledit un ou lesdits plusieurs dispositifs de climatisation (16, 18, 18a-18c, 20) en fonction des paramètres météorologiques (T, WI, N) déterminés par capteurs,
le dispositif de commande (22) étant destiné à associer, en fonction de paramètres météorologiques (T, WI, N) déterminés au cours d'au moins une période de détermination de phase écoulée (t_{PB1}, t_{PB2}), la situation climatique actuelle à l'une de plusieurs phases thermiques prédéfinies (K, Z, W), et à commander le ou les plusieurs dispositifs de climatisation (16, 18, 18a-18c, 20) en fonction de la phase thermique (K, Z, W) associée à la situation climatique actuelle, en tenant compte des spécifications de commande relatives à la phase thermique (SV_{K}, SV_{Z}, SV_{W}),
**caractérisé en ce que**, pour associer la situation climatique actuelle à une phase thermique (K, Z, W), le dispositif de commande (22) est destiné à surveiller les dépassements et/ou les sous-dépassements des températures de changement de phase (T_{PW1}-T_{PW4}) par les valeurs de température déterminées dans l'environnement du bâtiment (12) pendant la période de détermination de phase (t_{PB1}, t_{PB2}).

19. Système de commande de climatisation de bâtiment (10) selon la revendication 18,
**caractérisé en ce que** ledit système de commande de climatisation de bâtiment (10) est destiné à exécuter le procédé de commande du climat du bâtiment selon l'une quelconque des revendications 1 à 17.
